# EUROPÄISCHE PATENTSCHRIFT

(11) **EP 3 219 442 B1**
(45) Veröffentlichungstag und Bekanntmachung des Hinweises auf die Patenterteilung: **19.01.2022**
(21) Anmeldenummer: 16160951.6
(22) Anmeldetag: 17.03.2016
(51) Int. Cl.: B25B 23/10

(54) **ANTRIEBSELEMENT ZUR ÜBERTRAGUNG EINES DREHMOMENTES AUF EINE GEWINDEEINSATZ-HÜLSE**
DRIVE ELEMENT FOR TRANSMITTING A TORQUE TO A THREAD INSERT SLEEVE
ÉLEMENT D'ENTRAINEMENT D'UN COUPLE DE ROTATION SUR UNE COSSE A INSERT FILETE

(43) Veröffentlichungstag der Anmeldung: 20.09.2017
(73) Patentinhaber: Ludwig Hettich Holding GmbH & Co. KG, 78713 Schramberg-Sulgen (DE)
(72) Erfinder: HETTICH, Ulrich, 78713 Scharmberg (DE); HETTICH, Stefan, 78713 Scharmberg (DE); SCHWAB, Andreas, 72175 Dornhan (DE)
(74) Vertreter: Lucke, Andreas

(56) Entgegenhaltungen:
- EP-A1- 2 594 812
- EP-B1- 1 085 220
- DE-U1-202016 100 643
- US-A- 1 536 309
- US-A- 5 549 431
- US-A1- 2007 053 764
- US-A1- 2012 183 372
- US-B2- 7 731 464

## Beschreibung

### TECHNISCHES GEBIET

Die vorliegende Erfindung liegt auf dem Gebiet der Verankerungstechnik und umfasst ein Antriebselement zur Übertragung eines Drehmomentes auf eine Gewindeeinsatz-Hülse. Konkret betrifft sie einen Gewindeeinsatz, der das Antriebselement und eine Gewindeeinsatz-Hülse umfasst.

### HINTERGRUND

Im Stand der Technik werden Gewindeeinsätze als Verbindungselemente zur Herstellung von Verbindungen zwischen Bauteilen eingesetzt. Die zu verbindenden Bauteilen können aus denselben oder aus unterschiedlichen Werkstoffen bestehen. Beispiele für solche Verbindungen sind Verbindungen zwischen Stahl und Kunststoff, zwischen Stahl und Aluminium, zwischen Stahl und Holz und zwischen Holz und Beton. Von besonderer praktischer Bedeutung sind Gewindeeinsätze mit selbstschneidendem Außengewinde bzw. furchendem Außengewinde zum Einschrauben in Mauerwerk oder Beton. Gewindeeinsätze können sowohl zu Herstellungszwecken verbaut oder in jeweilige Bauteile eingebettet werden. Sie können aber auch nachträglich zu Reparaturzwecken eingebracht werden.

Gewindeeinsätze weisen üblicherweise ein Innengewinde und ein Außengewinde auf. Zur Herstellung einer Verbindung wird der Gewindeeinsatz über sein Außengewinde in ein Bohrloch eingeschraubt. Anschließend kann ein Verbindungsbolzen in den eingesetzten Gewindeeinsatz eingeschraubt werden, um eine Verbindung zu einem anderen Bauteil herzustellen.

Aus dem Stand der Technik sind verschiedene Gewindeeinsätze und Innengewindeanker mit einem Innengewinde und einem Außengewinde bekannt. Aus der EP1085220B1 ist beispielsweise ein Gewindeeinsatz in Form eines Bolzenankers bekannt, der aus einem massiven Werkstück gefertigt ist.

Aus der DE102007054798B3 ist ein Gewindeeinsatz in Form einer Gewindeeinsatz-Hülse bekannt, der aus einem Profilband gewickelt ist. Das Innengewinde und das Außengewinde werden dabei durch entsprechende Profile auf beiden Seiten des Profilbands gebildet. Solche gewickelten Gewindeeinsatz-Hülsen erfordern nur wenig Material und bieten den Vorteil einer vergleichsweise kostengünstigen Herstellung. Der zuvor genannte gewickelte Gewindeeinsatz ist allerdings nur bedingt zum Gewindefurchen geeignet, da das Einschraubdrehmoment nicht ohne weiteres von einem Antrieb am hinteren Ende über das gewickelte Profilband auf den Gewindefurchbereich am führenden Ende des Gewindeeinsatzes übertragen werden kann.

Zudem kommt erschwerend hinzu, dass zum Gewindefurchen eine gewisse Härte des furchenden Gewindes benötigt wird, die bei der Verwendung eines Stahlgewindes nur durch einen hohen Kohlenstoffanteil erreicht werden kann. Bei einem gewickelten Gewindeeinsatz aus Stahl führt der hohe Kohlenstoffanteil jedoch zu einer Sprödigkeit, die eine Übertragung des Einschraubdrehmoments in axiale Richtung erschwert oder verhindert. Bei der vergleichsweise geringen Wandstärke des gewickelten Gewindeeinsatzes lässt sich das gewickelte Material auch nicht ausschließlich an der Oberfläche härten, sondern wird beim Härten über den gesamten Querschnitt des Profilbandes gehärtet.

Zur Lösung dieses Problems wurde in der DE102013109987A1 eine Antriebswendel vorgeschlagen, die in einem führenden Bereich einer gewickelten Gewindeeinsatz-Hülse über ein äußeres Profil verankert werden kann. Über das äußere Profil kann das Drehmoment dann direkt im führenden Bereich von der Antriebswendel auf die Gewindeeinsatz-Hülse übertragen werden, ohne dass eine Drehmomentübertragung in axiale Richtung über die Gewindeeinsatz-Hülse erforderlich wäre.

Die US 5,54 9,431 offenbart ein einstückiges röhrenförmiges Befestigungselement mit einem Innenprofil, sowie ein handbetätigtes Drehwerkzeug, welches mit dem Innenprofil in Eingriff gebracht werden kann, um das Befestigungselement einzuschrauben. Das Innenprofil ist in der Innenwand des Befestigungselements ausgebildet und umfasst axiale Schlitze, in die axiale Rippen des Drehwerkzeugs eingreifen können.

Die US 2012/0183372A1 offenbart einen einstückigen hülsenförmigen Schraubanker, mit einem zylindrischen Körper, an dem ein Außengewinde ausgebildet ist. Im Inneren der Hülse sind Kerben ausgebildet, die sich über die gesamte Länge des Schraubanker erstrecken, und die ein Antriebs-Innenprofil bilden, in welches ein Antriebswerkzeug eingreifen kann. Ferner ist ein Innengewinde in einem Teilbereich des hülsenförmigen Schraubankers vorgesehen, welches sich mit dem Antriebs-Innenprofil überlagert. Der hülsenförmigen Schraubanker ist aus einem rohrförmigen Rohling gefertigt.

US 7 731 464 B2 offenbart einen zweiteiligen Gewindeeinsatz, bestehend aus einem inneren Hohlteil, das aus Metall gefertigt ist, und einem äußeren Hohlteil, das aus Kunstharz besteht. Das innere Hohlteil wird in das äußere Hohlteil eingeführt und darin befestigt, indem verbiegbare Abschnitte am führenden Ende des inneren Hohlteils umgebogen werden. Das innere Hohlteil hat an seinem nachlaufenden Ende einen Hohlraum, der eine Aufnahme mit einem Antriebsprofil darstellt, in dem entlang einer Längsachse des inneren Hohlteils ein Antriebswerkzeug in Form eines Sechskants zur Übertragung eines Drehmoments vom Antriebswerkzeug auf das innere Hohlteil aufgenommen werden kann. Ferner hat das innere Hohlteil einen hexagonalen Abschnitt, der mit einem hexagonalen Loch im äußeren Hohlteil in Eingriff steht, so dass eine kraftschlüssige Verbindung zwischen dem inneren Hohlteil und dem äußeren Hohlteil hergestellt wird.

DE 20 2016 100 643 U zeigt ein Montagewerkzeug für Gewindeeinsätze mit einer Spindel, die zumindest abschnittsweise mit einem Außengewinde versehen ist, einer Hülse, in der die Spin-del drehbar und axial verschiebbar geführt ist, einer Distanzhülse, die starr mit der Spindel verbunden ist und diese unter Ausbildung eines ringförmigen Freiraums zwischen der Außen-seite der Spindel und der Innenseite der Distanzhülse umgibt, und mit einem Druckstück, das drehbar und axial fest in der Hülse verbunden ist sowie drehfest und axial verschiebbar mit der Spindel verbunden ist.

US 2007/0053764 A1 offenbart ein Befestigungselement mit einer Hülse, an der ein selbstschneidendes Gewinde ausgebildet ist. Am führenden Ende hat die Hülse einen dem Gewinde vorgelagerten gewindefreien Abschnitt, an dem ein Kraftangriff ausgebildet ist, mit dem ein Drehmoment auf die Hülse übertragen werden kann.

### ZUSAMMENFASSUNG DER ERFINDUNG

Der vorliegenden Erfindung liegt die Aufgabe zugrunde, eine alternative vorteilhafte Lösung zum Einsetzten einer Gewindeeinsatz-Hülse zur Verfügung zu stellen.

Diese Aufgabe wird durch einen Gewindeeinsatz nach Anspruch 1, nach Anspruch 2 oder nach Anspruch 3 gelöst. Vorteilhafte Ausführungsformen und Weiterbildungen sind in den unabhängigen Ansprüchen angegeben.

Die vorliegende Erfindung betrifft einen Gewindeeinsatz zum Einsetzen in ein Bohrloch umfassend eine Gewindeeinsatz-Hülse mit einem Außengewinde und ein Antriebselement zur Übertragung eines Drehmomentes auf die Gewindeeinsatz-Hülse, das eine Aufnahme und einen axialen Verbindungsabschnitt umfasst. Die Aufnahme weist ein Antriebsprofil auf. In die Aufnahme kann entlang einer Längsachse des Antriebselements ein Antriebswerkzeug zur Übertragung eines Drehmomentes vom Antriebswerkzeug auf das Antriebselement aufgenommen werden, wobei die Längsachse durch das Zentrum des Antriebsprofils verläuft und einer Drehachse des Antriebselements entspricht, um die sich das Antriebselement bei der Drehmomentübertragung vom Antriebswerkzeug auf das Antriebselement dreht. Der axiale Verbindungsabschnitt hat eine äußere Fläche zur Ausbildung einer stoffschlüssigen, formschlüssigen und/oder kraftschlüssigen Verbindung zu der Gewindeeinsatz-Hülse, wobei über die äußere Fläche, wenn eine Verbindung zu einer Gewindeeinsatz-Hülse ausgebildet ist, ein Drehmoment vom Antriebselement auf die Gewindeeinsatz-Hülse übertragbar ist. Das Antriebselement weist zumindest abschnittsweise eine Querschnittsfläche auf, in die eine Kreislinie mit einem Zentrum, durch das die Drehachse verläuft, einbeschrieben werden kann. Mit anderen Worten verläuft die Längsachse durch den Mittelpunkt des Kreises, der durch die Kreislinie definiert wird. Das Zentrum oder der Mittelpunkt der Kreislinie muss dabei nicht notwendigerweise ebenfalls in der Querschnittsfläche liegen.

Dabei ist der Verbindungsabschnitt in der führenden Hälfte, vorzugsweise am führenden Ende der Gewindeeinsatz-Hülse innerhalb der Gewindeeinsatz-Hülse angeordnet, und über eine formschlüssige, stoffschlüssige und/oder kraftschlüssige Verbindung mit der Gewindeeinsatz-Hülse derart verbunden, dass ein über das Antriebsprofil auf das Antriebselement übertragenes Drehmoment vom Antriebselement auf die Gewindeeinsatz-Hülse übertragen wird.

Gemäß einem ersten Aspekt der Erfindung wird das genannte Drehmoment vom Antriebselement in einem führenden Bereich auf die Gewindeeinsatz-Hülse übertragen, wobei das Außengewinde der Gewindeeinsatzhülse in dem führenden Bereich vorliegt.

Gemäß einen zweiten Aspekt entspricht die Länge des Verbindungsabschnitts dem Ein- bis Dreifachen seines Durchmessers.

Gemäß einem dritten Aspekt weist das Antriebselement weiterhin einen axialen Gewindeabschnitt mit einem Außengewinde auf, wobei der Gewindeabschnitt näher an einem führenden Ende des Antriebselements angeordnet ist als der Verbindungsabschnitt, und wobei ein Gewindeinnendurchmesser des Gewindeabschnitts größer als ein Außendurchmesser des Verbindungsabschnitts ist.

Weil die äußere Fläche des Verbindungsabschnitts für eine stoffschlüssige, formschlüssige und/oder kraftschlüssige Verbindung zu der Gewindeeinsatz-Hülse geeignet ist, kann das Antriebselement über eine entsprechend ausgebildete Verbindung im Bereich eines führenden Endes der Gewindeeinsatz-Hülse mit der Gewindeeinsatz-Hülse verbunden werden oder in dieser verankert werden. Mithilfe eines Antriebswerkzeugs, das in die Aufnahme des Antriebselements aufgenommen werden kann und dabei in das Antriebsprofil eingreifen kann, kann dann ein Drehmoment vom Antriebswerkzeug auf das Antriebselement übertragen werden. Über die Verbindung kann das Drehmoment im führenden Bereich der Gewindeeinsatz-Hülse vom Antriebselement auf die Gewindeeinsatz-Hülse übertragen werden.

Die Drehmomentübertragung vom Antriebselement auf die Gewindeeinsatz-Hülse kann dabei ausschließlich oder zumindest vornehmlich in radialer Richtung erfolgen und muss nicht in Längsrichtung entlang der Gewindeeinsatz-Hülse hin zum führenden Ende der Gewindeeinsatz-Hülse erfolgen. Daher eignet sich das erfindungsgemäße Antriebselement auch zum Einsetzen gehärteter, spröder Gewindeeinsatz-Hülsen, wobei das Einsetzen mithilfe eines Gewindefurchens bzw. Gewindeschneidens durch das Außengewinde der Gewindeeinsatz-Hülse erfolgen kann.

Im Unterschied zur eingangs genannten Antriebswendel weist das erfindungsgemäße Antriebselement zumindest abschnittsweise eine Querschnittsfläche auf, in die eine Kreislinie, durch deren Zentrum oder Mittelpunkt die Drehachse verläuft, einbeschrieben werden kann. Die Querschnittsfläche entspricht dabei der Fläche, die in einer Schnittebene durch das Antriebselement senkrecht zur Längsachse des Antriebselements angeordnet ist, und definiert die Materialanordnung des Antriebselements in dieser Schnittebene. Mit anderen Worten ist zumindest auf einem Abschnitt des Antriebselements ein Teil des Materials des Antriebselements kreisförmig in einer geschlossenen Ringform um die Drehachse herum angeordnet, ohne dass dabei auch die Umfangslinie der Außenform dieses Abschnitts kreisförmig sein muss. Dies bietet eine besonders gute Stabilität bei einer Drehmomentübertragung und einer Drehung um die Drehachse. Insbesondere kann eine Torsion, eine axiale Verspannung oder eine Verformung des Antriebselements vergleichsweise gut vermieden werden, insbesondere bei einer Drehmomentübertragung aufgrund einer Drehung um die Drehachse zum Zwecke eines Einsetzens oder Gewindefurchens.

Zudem hat das Antriebselement aufgrund der oben genannten Querschnittsfläche auch eine geschlossene Außenfläche um die Drehachse herum, über die eine Herstellung der zuvor genannten Verbindung zur Gewindeeinsatz-Hülse möglich sein kann. Bei einer Verbindung über eine geschlossene, ringförmig um die Drehachse herum verlaufende Fläche, kann die Gewindeeinsatz-Hülse besonders gut gestützt und stabilisiert werden. Dies gestattet auch Gewindeeinsatz-Hülsen mit einer geringen Stabilität oder Formfestigkeit, insbesondere auch dünne, spröde, gewickelte Gewindeeinsatz-Hülsen, zuverlässig in Bohrlöcher einzuschrauben bzw. über ihr führendes Ende in die Bohrlöcher "einzuziehen".

Die äußere Fläche des Verbindungsabschnitts kann glatt und/oder profiliert sein. Eine glatte Fläche eignet sich besonders gut für ein stoffschlüssiges Verbinden oder Fügen mithilfe eines Fügemittels, beispielsweise Kleber oder Lot, da sich das Fügemittel entlang einer glatten Fläche oder eines glatten Flächenabschnitts gut verteilen und ausbreiten kann. Eine profilierte Fläche eignet sich besonders gut für eine formschlüssige Verbindung zu einer Fläche mit einem entsprechenden Gegenprofil. Die äußere Fläche kann auch profiliert sein und zugleich glatte Flächenabschnitte aufweisen. Dadurch können die beiden zuvor genannten Vorteile kombiniert werden, um eine Verbindung auszubilden, die sowohl stoffschlüssig ist als auch formschlüssige ist. Diese vorgenannten Verbindungen gestatten eine Übertragung hoher Drehmomente gegen hohe Widerstände, wie sie beispielsweise beim Gewindefurchen auftreten können.

Vorzugsweise ist das Antriebselement aus einem massiven Werkstück gefertigt. Anders als die eingangs genannte Antriebswendel, die aus einem Profil- oder Blechstreifen gebogen wird, kann das Antriebselement demnach mit einem geeigneten Fertigungsverfahren aus dem Vollen hergestellt sein. Dies gestattet eine besonders gute Stabilität und Steifigkeit.

Gemäß dem oben genannten zweiten Aspekt beträgt die Länge des Verbindungsabschnitts dem Ein- bis Dreifachen seines Durchmessers, beispielsweise das 1,5-fache. Bei einer kürzeren Länge steht eine größere Länge innerhalb der zu verbindenden Gewindeeinsatz-Hülse zur Verfügung, die für eine Anschlusskonstruktion genutzt werden kann, beispielsweise mithilfe eines tragenden Innengewindes. Eine größere Länge gestattet dagegen eine stärkere Verbindung zwischen dem Antriebselement und der Gewindeeinsatz-Hülse, wodurch größere Drehmomente, besonders gegen Widerstände beim Gewindefurchen, übertragen werden können. Der oben genannte Längenbereich bietet dabei für viele vorteilhafte Anwendungen einen optimalen Kompromiss.

In einer vorteilhaften Ausführungsform weist die äußere Fläche des Verbindungsabschnitts radial nach außen vorstehende Vorsprünge für eine Drehmomentübertragung über eine formschlüssige Verbindung zur Gewindeeinsatz-Hülse auf. Dies gestattet eine formschlüssige Verbindung zwischen dem Antriebselement und der Gewindeeinsatz-Hülse, bei der die Vorsprünge in ein entsprechendes Gegenprofil bzw. in entsprechende Vertiefungen im Bereich eines führenden Endes der Gewindeeinsatz-Hülse eingreifen. Dadurch kann eine formschlüssige Kraftübertragung stattfinden. Die äußere Fläche mit den nach außen vorstehenden Vorsprüngen kann beispielsweise die Form eines Vielzahnprofils oder eines Polygons aufweisen.

In der vorgenannten Ausführungsform erstrecken sich die Vorsprünge vorzugsweise über den Verbindungsabschnitt in Längsrichtung. Dadurch wird mehr Fläche für eine formschlüssige Kraftübertragung in Umfangsrichtung senkrecht zur Drehachse zur Verfügung gestellt.

In einer oder in mehreren der vorgenannten Ausführungsformen kann die Außenform des Verbindungsabschnitts in Längsrichtung translationssymmetrisch sein. Mit anderen Worten ändert sich das Profil der Umfangslinie des Verbindungsabschnitts entlang der Längsrichtung nicht, so dass die Außenform des Verbindungsabschnitts zylindrisch ist, unabhängig davon, ob und wieweit sich die Aufnahme durch den Verbindungsabschnitt erstreckt. Dies gestattet, dass der Verbindungsabschnitt axial, d.h. in Längsrichtung, in eine zylindrische oder im Wesentlichen zylindrische Gewindeeinsatz-Hülse eingesetzt werden kann, wobei ein über die Länge des Verbindungsabschnitts gleichmäßiges formschlüssiges Eingreifen in ein entsprechendes Gegenprofil möglich ist und/oder ein über die Länge des Verbindungsabschnitts gleichmäßiger Fügespalt oder ein gleichmäßiges Anliegen für eine stoffschlüssige Verbindung bereitgestellt werden kann.

Es wird angemerkt, dass das erfindungsgemäße Antriebselement vorzugsweise mit Gewindeeinsatz-Hülsen verwendet wird, die eine im Wesentlichen kreiszylindrische Außenfläche und eine kreiszylindrische oder im Wesentlichen kreiszylindrische Innenfläche aufweisen. Die Abweichung zu einer exakten Zylinderform, bei welcher sich das Außen- bzw. Innenprofil in Längsrichtung nicht ändert und bei welcher die Außen- bzw. Innenform in Längsrichtung translationssymmetrisch ist, wird dabei vorzugsweise hauptsächlich durch das vorhandene Außengewinde und - falls vorhanden - durch das Innengewinde der Gewindeeinsatz-Hülse gebildet. Es wird darauf hingewiesen, dass ein "Zylinder" im Sinne der vorliegenden Offenbarung auch solche Zylinder umfasst, die nicht kreiszylindrisch sind und Querschnitte haben, die von einer Kreisform abweichen.

Das Antriebsprofil der Aufnahme kann ein Innensechsrundprofil, ein Innenvielkantprofil oder ein Innenpolygonprofil sein. Dies sind gängige Profile die vorteilhaft zur Übertragung eines Drehmoments verwendet werden können.

Die Aufnahme des erfindungsgemäßen Antriebselements kann durch ein Durchgangsloch oder ein Sackloch gebildet sein, wobei sich das Durchgangsloch vorzugsweise zumindest abschnittsweise entlang der Längsrichtung verjüngt und/oder eine Schulter aufweist. Durch ein Sackloch, durch eine Verjüngung in einem Durchgangsloch sowie durch eine Schulter in einem Durchgangsloch kann jeweils ein Anschlag gebildet werden, der verhindert, dass ein Antriebswerkzeug, dessen Form in Längsrichtung translationssymmetrisch ist, nicht durch das Antriebselement hindurchgeschoben werden kann. In alternativen Ausführungsformen kann das Durchgangsloch entlang der Längsrichtung aber auch einen unveränderten Querschnitt haben bzw. kann es in Längsrichtung translationssymmetrisch sein. Bei solchen Ausführungsformen kann ein Anschlag durch eine Verjüngung oder eine Schulter eines entsprechenden nicht translationssymmetrischen Antriebswerkzeugs gebildet werden.

In einer oder in mehreren der vorgenannten Ausführungsformen oder in einer der weiteren Ausführungsform weist die äußere Fläche des Verbindungsabschnitts drei oder mehr in Längsrichtung verlaufende Mantellinien auf, die auf einer gedachten einhüllenden Fläche der Form eines senkrechten Kreiszylinders liegen. Dabei ist die äußere Fläche auf Flächenabschnitten zwischen jeweils zwei radial benachbarten der Mantellinien von der gedachten einhüllenden Fläche beabstandet, so dass zwischen der gedachten einhüllenden Fläche und der äußeren Fläche des Verbindungsabschnitts gedachte Kanäle gebildet werden. Eine solche Form ist besonders vorteilhaft für eine gute und gleichmäßige stoffschlüssige Verbindung zu einer zylindrischen oder im Wesentlichen zylindrischen Innenfläche einer Gewindeeinsatz-Hülse. Dabei kann der Verbindungsabschnitt entlang der in Längsrichtung verlaufenden Mantellinien innerhalb der Gewindeeinsatz-Hülse gegen eine Querverschiebung und gegen eine Verkippung gesichert werden und in einer definierten Position gehalten werden. Zwischen den genannten Flächenabschnitten und der Innenwand der Gewindeeinsatz-Hülse werden Kanäle gebildet, in welche ein Fügemittel eingebracht werden kann oder über eine Kapillarwirkung eingezogen werden kann.

In der vorgenannten Ausführungsform kann die äußere Fläche des Verbindungsabschnitts beispielsweise ein Außenvielkantprofil oder ein Außenpolygonprofil aufweisen.

In vorteilhaften Weiterbildung weist das Antriebselement einen axialen Sperrabschnitt auf, der an den Verbindungsabschnitt angrenzt und der im Bereich der Grenze zu den gedachten Kanälen einen geringeren Abstand oder keinen Abstand von der fortgesetzten gedachten einhüllenden Fläche aufweist. Der Sperrabschnitt kann verhindern, dass beim Herstellen einer stoffschlüssigen Verbindung, ein Fügemittel, beispielsweise Lot oder Kleber, oder eine Schmelze in einen Innenbereich der Gewindeeinsatz-Hülse einfließt. Dadurch kann vermieden werden, dass ein Innengewinde oder Innenbereich der Gewindeeinsatz-Hülse, das bzw. der für eine spätere Anschlusskonstruktion benötigt wird, verschlossen oder unbrauchbar gemacht wird.

Gemäß dem oben genannten dritten Aspekt umfasst das Antriebselement weiterhin einen axialen Gewindeabschnitt mit einem Außengewinde, wobei der Gewindeabschnitt näher an einem führenden Ende des Antriebselements angeordnet ist als der Verbindungsabschnitt und wobei ein Gewindeinnendurchmesser des Gewindeabschnitts größer als ein Außendurchmesser des Verbindungsabschnitts ist. Das Außengewinde des Gewindeabschnitts kann ein Gewindefurchen ermöglichen. Dieses Antriebselement kann daher für furchende Gewindeeinsätze verwendet werden, bei denen das Gewindefurchen durch das Antriebselement vorgenommen wird und nicht durch das Außengewinde der Gewindeeinsatz-Hülse erfolgen muss. Dadurch können auch Gewindeeinsatz-Hülsen aus korrosionsbeständigen Materialien oder Werkstoffen, z.B. aus rostfreien Stählen, verwendet werden, die in der Regel nicht gehärtet werden können und daher für ein Furchen ungeeignet sind. Ebenso können für die Gewindeeinsatz-Hülsen auch andere, nicht zum furchen geeignete Werkstoffe, wie zum Beispiel Kunststoffe, verwendet werden.

In der vorgenannten Ausführungsform kann der maximale Außendurchmesser des Gewindeabschnitts in Richtung auf das führende Ende des Antriebselements kleiner werden. Dies erleichtert das Einsetzen in ein Bohrloch und vereinfacht ein Gewindefurchen.

In einer oder in beiden vorgenannten Ausführungsformen kann das Außengewinde mindestens einen halben Gewindegang, besonders vorzugsweise mindestens einen ganzen Gewindegang umfassen. Dadurch ist das Außengewinde des Gewindeabschnitts ausreichend lang, um ein Gewinde furchen zu können.

In einer oder in mehreren der vorgenannten Ausführungsformen kann das Außengewinde des Gewindeabschnitts Furchzähne umfassen. Diese führen zu einer Vereinfachung des Gewindefurchens.

In einer oder in mehreren der vier der vorgenannten Ausführungsformen kann das Antriebselement zwei- oder mehrstückig mit einem inneren Element mit dem Verbindungsabschnitt und mit einem äußeren Element zur Ausbildung des Gewindeabschnitts, welches das innere Element zumindest abschnittsweise umgibt, ausgebildet sein. Dadurch kann zur Härtung des Außengewindes des Gewindeabschnitts lediglich das äußere Element gehärtet werden. Zudem können das innere Element und das äußere Element unabhängig voneinander mit verschiedenen Herstellungsverfahren hergestellt werden und erst anschließend miteinander verbunden werden.

In einigen der vorgenannten Ausführungsformen kann die Länge des Verbindungsabschnitts der Länge des Antriebselements entsprechen. In dieser Ausführungsformen kann das Antriebselement vollständig in eine Gewindeeinsatz-Hülse eingebracht werden, wobei eine stoffschlüssige, kraftschlüssige und/oder formschlüssige Verbindung zwischen der Gewindeeinsatz-Hülse und dem Antriebselement über die gesamte Länge des Antriebselementes hergestellt werden kann.

In einer bevorzugten Ausführungsform ist das Antriebselement einstückig ausgebildet. Dies gestattet bessere Stabilität und Herstellbarkeit, da keine Einzelelemente miteinander verbunden werden müssen.

In einer oder in mehreren der vorgenannten Ausführungsformen ist das Antriebselement vollständig oder teilweise aus einem härtbaren Metall ausgebildet. Nachdem das härtbare Metall gehärtet ist, kann es beispielsweise eine Härte von ≥ 50 HRC haben, wobei HRC die Rockwellhärte nach ISO 6508-1 (1997) bezeichnet. Dies ist besonders vorteilhaft, wenn das Antriebselement zum Gewindefurchen eingesetzt wird. Wenn das Antriebselement mehrstückig ausgebildet ist und ein Außengewinde aufweist, kann beispielsweise auch nur dasjenige Stück, dass das Außengewinde bildet, aus einem härtbaren Metall ausgebildet sein.

In einer vorteilhaften Ausführungsform umfasst die Innenseite der Gewindeeinsatz-Hülse mehrere Vertiefungen, die entsprechend der radial nach außen vorstehenden Vorsprünge des Verbindungsabschnitts geformt und angeordnet sind, wobei die Vorsprünge in den Vertiefungen aufgenommen sind, so dass eine formschlüssige Verbindung besteht. Diese formschlüssige Verbindung gestattet eine Kraftübertragung in Umfangsrichtung.

Zusätzlich oder alternativ kann zwischen der äußeren Fläche des Verbindungsabschnitts und der Gewindeeinsatz-Hülse eine stoffschlüssige Verbindung bestehen, die durch Löten, Kleben oder Schweißen gebildet ist.

In einer oder in mehreren der vorgenannten Ausführungsformen kann die Gewindeeinsatz-Hülse zumindest teilweise aus einem anderen Material als das Antriebselement gebildet sein, wobei die Gewindeeinsatz-Hülse vorzugsweise aus einem korrosionsbeständigen Metall, besonders vorzugsweise aus rostfreiem Stahl oder aus Kunststoff besteht oder eines dieser Materialen umfasst. Weil eine korrosionsbeständige Gewindeeinsatz-Hülse selbst nicht zum Gewindefurchen geeignet ist, kann diese in besonders vorteilhafter Weise in Kombination mit einem Antriebselement wendet werden, das zum Furchen geeignet ist und das daher zwangsläufig aus einem anderen Material besteht.

Die Gewindeeinsatz-Hülse kann einen gewickelten Metallstreifen umfassen oder daraus bestehen und/oder kann ein Innengewinde aufweisen. Eine gewickelte Gewindeeinsatz-Hülse erfordert besonders wenig Materialeinsatz und ist kostengünstig herstellbar. Ein Innengewinde kann zur Herstellung einer Verankerung verwendet werden.

In einer oder in mehreren der vorgenannten Ausführungsformen kann das Außengewinde auf dem Gewindeabschnitt das Außengewinde der Gewindeeinsatz-Hülse fortsetzen, wobei es vorzugsweise dieselbe Steigung wie das Außengewinde der Gewindeeinsatz-Hülse aufweist. Dadurch kann das Außengewinde des Antriebselements Furchen eines Innengewindes in einem Bohrloch verwendet werden, wobei das nachfolgende Außengewinde der Gewindeeinsatz-Hülse in das gefurchte Innengewinde vergleichsweise leichtgängig eingreifen und eingeschraubt bzw. nachgezogen werden kann.

In einer vorteilhaften Weiterbildung weist der Verbindungsabschnitt ein Außengewinde auf, das dem Innengewinde der Gewindeeinsatz-Hülse entspricht, und besteht zwischen dem Verbindungsabschnitt und der Gewindeeinsatz-Hülse ein eine formschlüssige Schraubverbindung. In dieser Ausführungsform muss demnach kein zusätzliches Gegenprofil in die Gewindeeinsatz-Hülse eingebracht sein. Stattdessen kann die formschlüssige Verbindung mithilfe eines ohnehin vorhandenen Innengewindes der Gewindeeinsatz-Hülse hergestellt werden.

### KURZBESCHREIBUNG DER FIGUREN

Weitere Vorteile und Merkmale ergeben sich aus der folgenden Beschreibung, in der beispielhafte Ausführungsformen anhand der beigefügten Figuren näher erläutert werden. In den Figuren werden gleiche Elemente mit gleichen Bezugszeichen bezeichnet.
- Figuren 1a - e: zeigen unterschiedliche Ansichten eines Antriebselements gemäß einer ersten Ausführungsform.
- Figuren 2a - c: zeigen unterschiedliche Ansichten einer Gewindeeinsatz-Hülse, die mit dem Antriebselement der Figur 1 eingesetzt werden kann.
- Figuren 3a - c: zeigen unterschiedliche Ansichten eines Gewindeeinsatzes, der das Antriebselement der Figur 1 und die Gewindeeinsatz-Hülse der Figur 2 umfasst.
- Figuren 4a - d: zeigen unterschiedliche Ansichten eines erfindungsgemäßen Antriebselements gemäß einer zweiten Ausführungsform.
- Figuren 5a, b: zeigen unterschiedliche Ansichten einer Gewindeeinsatz-Hülse, die mithilfe des Antriebselements der Figur 4 eingesetzt werden kann.
- Figuren 6a - c: zeigen unterschiedliche Ansichten eines erfindungsgemäßen Gewindeeinsatzes, der das Antriebselement der Figur 4 und die GewindeeinsatzHülse der Figur 5 umfasst.
- Figuren 7a - d: zeigen unterschiedliche Ansichten eines Antriebselements gemäß einer dritten Ausführungsform.
- Figuren 8a - i: zeigen eine erste Weiterbildung des Antriebselements der Figur 4.
- Figuren 9a - h: zeigen eine zweite Weiterbildung des Antriebselements der Figur 4.

### AUSFÜHRLICHE BESCHREIBUNG BEISPIELHAFTER AUSFÜHRUNGSFORMEN

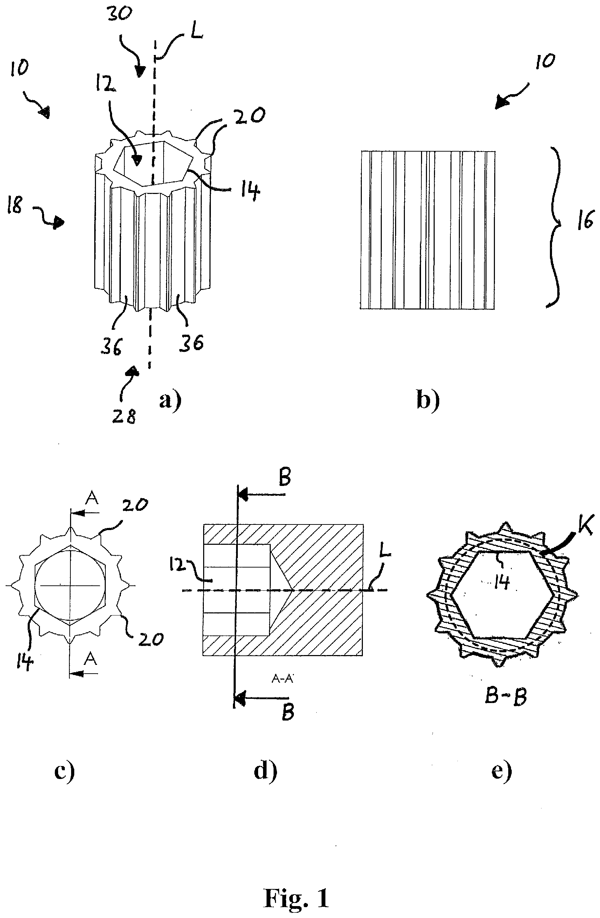

Figuren 1a bis e zeigen unterschiedliche Ansichten eines Antriebselements 10 gemäß einer ersten Ausführungsform. Figur 1a zeigt das Antriebselement 10 in einer perspektivischen Ansicht von schräg oben, Figur 1b zeigt das Antriebselement 10 von der Seite, Figur 1c zeigt das Antriebselement 10 in Draufsicht, Figur 1d zeigt eine Ansicht auf einen Längsschnitt durch das Antriebselement 10 entlang der in Figur 1c dargestellten Ebene A-A und Figur 1e zeigt einen Querschnitt durch das Antriebselement 10 entlang der in Figur 1d dargestellten Ebene B-B.

Das Antriebselement 10 weist eine Aufnahme 12 mit einem Antriebsprofil 14 auf. Bei der Ausführungsform der Figur 1 hat das Antriebsprofil 14 die Form eines Innensechskants. In anderen Ausführungsformen kann das Antriebsprofil 14 eine andere Form aufweisen, beispielsweise die Form eines Innensechsrunds oder eines Innenvielkant- bzw. Innenpolygonprofils, bei denen es sich nicht um ein Innensechskantprofil handeln muss. Wie in der Figur 1d zu erkennen ist, wird die Aufnahme 12 durch ein Sackloch gebildet, das sich bis zu einer gewissen Tiefe in das Antriebselement 10 hineinerstreckt, jedoch nicht durchgängig ist.

Das Antriebselement 10 umfasst weiterhin einen axialen Verbindungsabschnitt 16, der sich in der Ausführungsform der Figur 1 über die gesamte Länge des Antriebselements 10 erstreckt.

In der vorliegenden Offenbarung bezeichnet eine "Länge" eines Antriebselementes eine Abmessung des Antriebselements in einer Längsrichtung des Antriebselements. Die Längsrichtung des Antriebselements 10 ist durch die Richtung der Längsachse L definiert, wobei die Längsachse L einer Drehachse entspricht, um die sich das Antriebselement bei einer Drehmomentübertragung von einem geeigneten Antriebswerkzeug (nicht gezeigt) auf das Antriebselement 10 und vom Antriebselement 10 auf eine Gewindeeinsatz-Hülse dreht. Die Abmessung des Antriebselements in Längsrichtung muss daher nicht notwendigerweise größer sein als die Abmessung des Antriebselements in Querrichtung. Die Längsachse L verläuft durch das Zentrum oder den Mittelpunkt des Antriebsprofils 14.

Die Längsachse L ist eine Symmetrieachse des Antriebsprofils 14, wobei die Symmetrie für das Beispiel des Innensechskantprofils des Antriebselements 10 der Figur 1 eine sechszählige Symmetrie ist. Bei anderen Ausführungsformen kann die Symmetrie eine andere sein, die der jeweiligen Zähligkeit des jeweiligen Antriebsprofils entspricht.

Das Antriebselement 10 hat eine zylindrische Form mit der Längsachse L als Mittelachse, wobei die Außenform des Antriebselements 10 in Längsrichtung translationssymmetrisch ist, wie in Figur 1a zu erkennen ist.

Der Verbindungsabschnitt 16 weist eine äußere Fläche 18 auf, über die eine Verbindung zu einer Gewindeeinsatz-Hülse hergestellt werden kann. In der Ausführungsform der Figur 1 ist die äußere Fläche 18 profiliert und weist mehrere Vorsprünge 20 auf, die nach radial außen vorstehen bzw. sich nach radial außen erstrecken. Die Richtung "nach radial außen" bezeichnet dabei eine Richtung, die senkrecht zur Längsachse L ist und von der Längsachse L weg weist. Bei der Ausführungsform der Figur 1 erstrecken sich die Vorsprünge 20 weiterhin in Längsrichtung, sodass jeder der Vorsprünge 20 über die Länge des Verbindungsabschnitts 16 eine Fläche bereitstellt, die zumindest teilweise in Umfangsrichtung weist und damit für eine Drehmomentübertragung bei einer Drehung um die Längsachse L geeignet ist. Die Umfangsrichtung ist dabei senkrecht zur Längsachse L und senkrecht zur radialen Richtung am Ort der jeweiligen Fläche.

Die in Figur 1e gezeigte Querschnittsfläche, die sich bei einem Schnitt durch den Verbindungsabschnitt 16 quer bzw. senkrecht zur Längsachse L ergibt, ist nach innen durch das Antriebsprofil 14 begrenzt und ist nach außen durch das Profil der äußeren Fläche 18 begrenzt. In diese Querschnittsfläche kann eine gedachte Kreislinie K, durch deren Zentrum die Längsachse L verläuft, einbeschrieben werden. Weil die Querschnittsfläche durch die vorhandene Materialverteilung oder die konkrete Anordnung des Materials definiert ist, ist deshalb ein Teil des Materials des Antriebselements 10 kreisförmig in einer geschlossenen Ringform um die Längsachse L herum angeordnet. Eine solche geschlossene, durchgängige und kreisförmige Materialanordnung um eine Längsachse L, die als Drehachse verwendet werden kann, bietet eine besonders gute Formstabilität und Steifigkeit, die sehr widerstandsfähig gegen eine Verformung ist.

Wie anhand der Figuren 1a und 1d zu erkennen ist, kann bei dem Antriebselement 10 der Figur 1 in jeden Querschnitt eine Kreislinie K um ein zugehöriges Zentrum, durch welche die Längsachse L verläuft, einbeschrieben werden.

Bei anderen Ausführungsformen, die nicht gezeigt sind, kann eine Kreislinie K um die Längsachse L auch nur abschnittsweise in die Querschnitte des entsprechenden Abschnitts einbeschrieben werden, wobei in die Querschnitte eines oder mehrerer anderer axialer Abschnitte keine Kreislinien mit einem jeweils zugehörigen Zentrum, durch das die Längsachse L verläuft, einbeschrieben werden können. In diesen Abschnitten dieser anderen nicht gezeigten Ausführungsformen befindet sich demnach kein Material, das in einer geschlossenen Kreisform um die Längsachse L angeordnet ist.

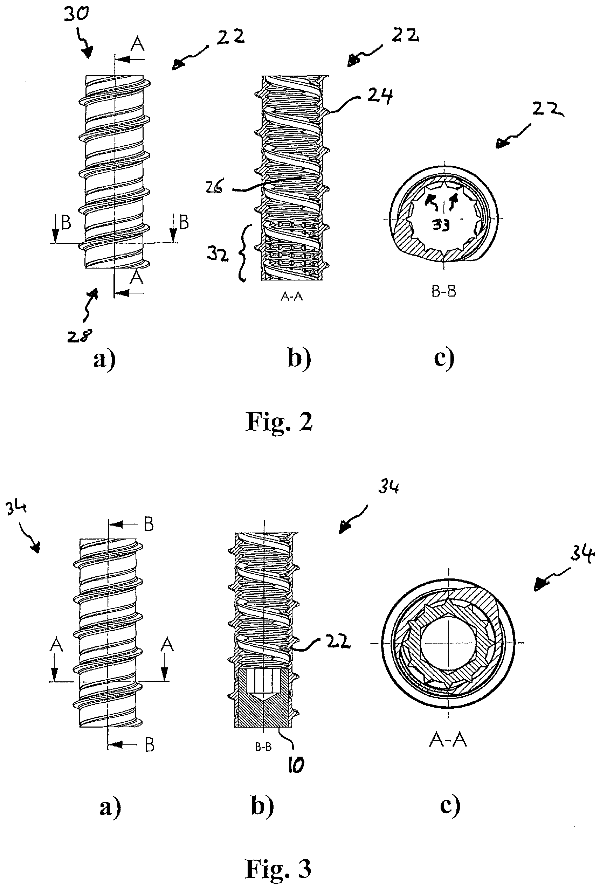

Die Figuren 2a bis c zeigen eine Gewindeeinsatz-Hülse 22 in einer Seitenansicht von außen (Figur 2a), in einer Längsschnittansicht für einen Längsschnitt entlang der in Figur 2a gezeigten Ebene A-A (Figur 2b) und in einer Querschnittansicht für einen Querschnitt entlang der in Figur 2a gezeigten Ebene B-B (Figur 2c).

Die Gewindeeinsatz-Hülse 22 weist ein Außengewinde 24 und ein Innengewinde 26 auf. Die in Figur 2 gezeigte Gewindeeinsatz-Hülse 22 ist durch ein gewickeltes Profilband gebildet, das vorzugsweise aus Stahl besteht. Das Außengewinde 24 und das Innengewinde 26 werden dabei durch eine entsprechende Profilierung des Profilbandes gebildet. Die Gewindeeinsatz-Hülse 22 hat ein führendes Ende 28 und ein hinteres Ende 30, das dem führenden Ende 28 in Längsrichtung gegenüberliegt. Das führende Ende 28 ist dabei dasjenige Ende, das beim Einsetzen der Gewindeeinsatz-Hülse 22 in ein Bohrloch führt und das dabei in das Bohrloch hinein weist.

Bei der Gewindeeinsatz-Hülse 22 der Figur 2 handelt es sich um eine Gewindeeinsatz-Hülse, die für eine Verbindung mit dem Antriebselement 10 der Figur 1 ausgelegt ist. Für diese Verbindung sind in einem führenden axialen Bereich 32 der Gewindeeinsatz-Hülse 22 Vertiefungen 33 eingebracht, die ein Gegenprofil in Form eines Innenprofils für das Profil der äußeren Fläche 18 des Verbindungselements 10 der Figur 1 bilden. Die Vertiefungen 33 sind Aussparungen aus den Gewindegängen des Innengewindes 26, die mit anderen Vertiefungen 33 anderer Längspositionen in Längsrichtung fluchten.

Die Länge des führenden Bereichs 32, in den die Vertiefungen 33 eingebracht sind, entspricht dabei der Länge des Antriebselements 10. Dadurch kann das Antriebselement 10 vom führenden Ende 28 in Längsrichtung in die Gewindeeinsatz-Hülse 22 eingesetzt werden, ohne dass das Antriebselement 10 dabei um seine Längsachse L gedreht werden muss bzw. in Bezug auf die Gewindeeinsatz-Hülse 22 gedreht werden muss. Wenn das Antriebselement 10 in die Gewindeeinsatz-Hülse 22 über seine Länge eingesetzt ist, wird ein weiteres Verschieben zum hinteren Ende 30 formschlüssig verhindert, weil die entsprechenden Vertiefungen 33 nur im führenden Bereich 32 eingebracht sind. Am hinteren Ende des führenden Bereichs 32 besteht damit ein Anschlag für das entsprechende Antriebselement 10.

Die Figuren 3a bis c zeigen einen erfindungsgemäßen Gewindeeinsatz 34, der das Antriebselement 10 der Figur 1 und die Gewindeeinsatz-Hülse 22 der Figur 2 umfasst, wobei das Antriebselement 10 im führenden Bereich 32 innerhalb der Gewindeeinsatz-Hülse 22 angeordnet ist und mit dieser verbunden ist. Dabei zeigt Figur 3a eine Seitenansicht von außen, Figur 3b eine Ansicht eines Längsschnitts entlang der in Figur 3a dargestellten Ebene B-B und Figur 3c eine Ansicht eines Querschnitts entlang der in Figur 3a dargestellten Ebene A-A.

Wenn das Antriebselement 10, wie zuvor beschrieben, in die Gewindeeinsatz-Hülse 22 eingesetzt wird, greifen die Vorsprünge 20 in jeweils entsprechende der Vertiefungen 33 ein, sodass ein relatives Drehen zwischen dem Antriebselement 10 und der Gewindeeinsatz-Hülse 22 um die Längsachse L formschlüssig verhindert wird. Eine Drehung um die Längsachse L des Antriebselements 10 wird daher über die profilierte äußere Fläche 18 auf die Einsatzhülse 22 übertragen.

Beim Gewindeeinsatz 34, bei dem das Antriebselement 10 und die Gewindeeinsatz-Hülse 22 verbunden sind, fallen die Längsachse L des Antriebselements 10 und die Längsachse der Gewindeeinsatz-Hülse 22 zusammen und bilden eine Längsachse L des Gewindeeinsatzes 34, die zugleich eine Drehachse des Gewindeeinsatzes 34 und der Gewindeeinsatz-Hülse 22 ist.

Die Verbindung zwischen dem Antriebselement 10 und der Gewindeeinsatz-Hülse 22 kann ausschließlich formschlüssig sein, kann aber auch eine Kombination aus einer formschlüssigen und einer stoffschlüssigen Verbindung sein.

In Verbindung mit der Gewindeeinsatz-Hülse 22 ist das Antriebselement 10 auch gegen eine Verschiebung in axiale Richtung entlang der Längsachse L gesichert, sodass das Antriebselement 10 nicht in Richtung zum führenden Ende 28 aus der Gewindeeinsatz-Hülse 22 herausgeschoben werden kann. Eine solche ausschließlich formschlüssige Verbindung kann in der Ausführungsform der Figur 3 beispielsweise dadurch erreicht werden, dass der Gewindeeinsatz 34 im führenden Bereich 32 der Gewindeeinsatz-Hülse 22 leicht verbogen wird.

In anderen Ausführungsformen, bei denen die Vorsprünge 20 des Antriebselements nicht in Längsrichtung translationssymmetrisch sind, kann eine ausschließlich formschlüssige Verbindung auch dadurch erreicht werden, dass das Profilband für die Bildung der Gewindeeinsatz-Hülse 22 bzw. zur Bildung des Gewindeeinsatzes 24 um das Antriebselement herumgewickelt wird, wobei im Profilband ein entsprechend der nichttranslationssymmetrischen Vorsprünge ausgebildetes Gegenprofil eingebracht ist. Die dabei entstehende formschlüssige Verbindung kann ein axiales Verschieben sowohl hin zum hinteren Ende 30 als auch hin zum führenden Ende 28 des Antriebselements verhindern.

Eine zusätzliche stoffschlüssige Verbindung zwischen dem Antriebselement 10 und der Gewindeeinsatz-Hülse 22 kann beispielsweise durch Schweißen, durch Löten oder durch Kleben hergestellt werden. Wie in Figur 1a gezeigt ist, weist die äußere Fläche 18 zwischen benachbarten Vorsprüngen 20 glatte Flächenabschnitte 36 auf, die sich zwischen jeweils 2 Vorsprüngen 20 in Längsrichtung erstrecken. Entlang dieser Flächenabschnitte 36 kann sich ein Fügemittel, beispielsweise Lot, Kleber oder eine Schmelze, gut in Längsrichtung verteilen und auf den Flächenabschnitten 36 verteilen, um eine zusätzliche stoffschlüssige Verbindung zwischen der äußeren Fläche 18 und der Gewindeeinsatz-Hülse 22 bzw. eines Teils ihrer Innenfläche herzustellen. Eine solche stoffschlüssige Verbindung kann verhindern, dass das Antriebselement 10 in Längsrichtung vom hinteren Ende 30 zum führenden Ende 28 herausrutscht. Zusätzlich kann die stoffschlüssige Verbindung zur Drehmomentübertragung vom Antriebselement 10 auf die Gewindeeinsatz-Hülse 22 beitragen.

Zum Einsetzen oder Einschrauben des Gewindeeinsatzes 34 der Figur 3 in ein Werkstück wird der Gewindeeinsatz 34 zunächst mit seinem führenden Ende 28 an ein jeweiliges Bohrloch angesetzt. Das Einschrauben erfolgt mithilfe eines Antriebswerkzeuges, das vom hinteren Ende 30 durch die Gewindeeinsatz-Hülse 22 in die Aufnahme 12 des Antriebselements 10 eingesetzt wird und das über ein entsprechendes Antriebsprofil in das Antriebsprofil 14 der Aufnahme 12 eingreift. Über ein Drehen des Antriebswerkzeuges um die Längsachse L wird ein Drehmoment auf das Antriebselement 10 übertragen. Aufgrund der Verbindung zwischen dem Antriebselement 10 und der Gewindeeinsatz-Hülse 22 wird das Drehmoment über die äußere Fläche 18 des Verbindungsabschnitts 16 des Antriebselements 10 im führenden Bereich 32 der Gewindeeinsatz-Hülse 22 auf die Gewindeeinsatz-Hülse 22 übertragen.

Diese Drehmomentübertragung erfolgt in radiale Richtung im Bereich des führenden Endes 28 der Gewindeeinsatz-Hülse 22. Aufgrund des zylindrisch angeordneten Materials des Antriebselements 10 ist die Gewindeeinsatz-Hülse 22 in diesem Bereich sehr gut stabilisiert und gestützt, sodass die Gewindeeinsatz-Hülse 22 auch aus einem gehärteten Profilband gebildet sein kann und das Außengewinde 24 im führenden Bereich 32 zum Gewindefurchen verwendet werden kann.

Es wird darauf hingewiesen, dass hier beschriebene Antriebselemente, insbesondere auch die ausführlich beschriebenen beispielhaften Antriebselemente 10, 110, 210, auch vorteilhaft zum Einsetzen anderer Gewindeeinsatz-Hülsen verwendet werden können. Beispielsweise für Gewindeeinsatz-Hülsen aus Kunststoff.

Geeignete Gewindeeinsatz-Hülsen können auch gegossen sein oder einem massiven Materialblock durch Materialentfernen hergestellt sein und müssen nicht gewickelt sein und auch nicht zum Furchen geeignet sein.

Weil die Aufnahme 12 des Antriebselements 10 durch ein Sackloch gebildet ist, kann das Antriebswerkzeug nicht in Längsrichtung durch das Antriebselement 10 hindurchgeschoben werden, sondern schlägt in diesem an.

In anderen Ausführungsformen kann die Aufnahme 12 auch durch ein Durchgangsloch gebildet werden, das sich in Richtung auf das führende Ende 28 des Antriebselements 10 verjüngt und/oder in dem ein Anschlag Form einer Schulter ausgebildet ist. Dadurch kann ebenfalls verhindert werden, dass ein entsprechendes Antriebswerkzeug durch das Antriebselement 10 hindurchgeschoben werden kann. In weiteren Ausführungsformen kann die Aufnahme 12 auch durch ein translationssymmetrisches Durchgangsloch mit konstantem Querschnitt gebildet werden. Bei solchen Ausführungsformen kann ein Anschlag durch eine Verjüngung oder eine Schulter eines entsprechenden nicht translationssymmetrischen Antriebswerkzeugs gebildet werden.

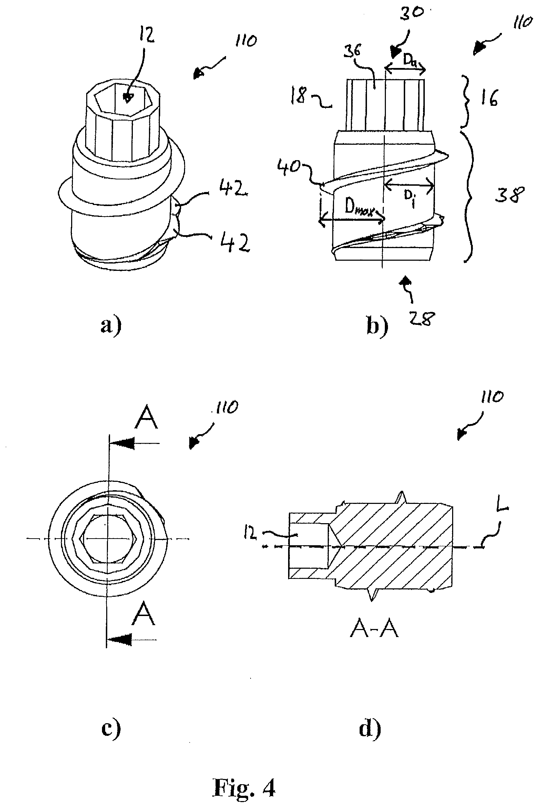

Die Figuren 4a bis d zeigen ein Antriebselement 110 gemäß einer zweiten Ausführungsform in einer perspektivischen Außenansicht (Figur 4a), in einer Seitenansicht (Figur 4b), in Draufsicht (Figur 4c) sowie in einer Schnittansicht für einen Schnitt entlang der in Figur 4c dargestellten Ebene A-A (Figur 4d). Das Antriebselement 110 umfasst einen axialen Verbindungsabschnitt 16 sowie einen axialen Gewindeabschnitt 38 mit einem Außengewinde 40. Der Gewindeabschnitt 38 ist dabei dichter an einem führenden Ende 28 des Antriebselements 110 angeordnet als der Verbindungsabschnitt 16. In der Ausführungsform der Figur 4 befindet sich der Verbindungsabschnitt am hinteren Ende 30 des Antriebselements 110 und der Gewindeabschnitt 38 am führenden Ende 28 des Antriebselements 110.

Wie in Figur 4b gezeigt ist, ist ein Gewindeinnendurchmesser Dᵢ des Gewindeabschnitts 38 größer als ein Außendurchmesser Dₐ des Verbindungsabschnitts 16. Dadurch wird zwischen diesen Abschnitten ein Absatz gebildet, mit dem das Antriebselement 110 beim Einbringen in eine geeignete Gewindeeinsatz-Hülse an das führende Ende der Gewindeeinsatz-Hülse anschlagen kann.

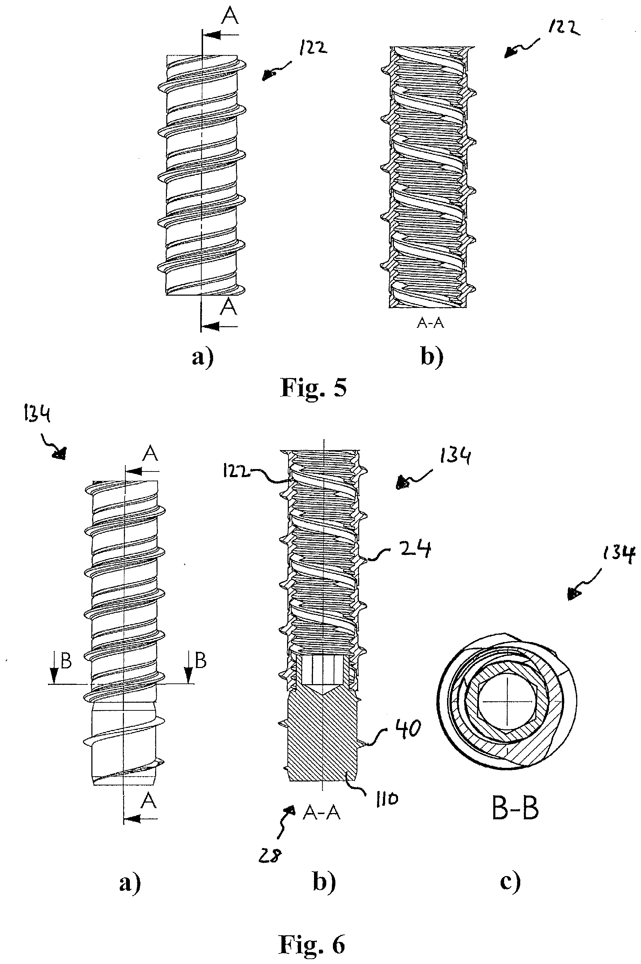

Figur 5 zeigt eine Gewindeeinsatz-Hülse 122 in Seitenansicht (Figur 5a) und in einer Längsschnittansicht für einen Schnitt entlang der in Figur 5a dargestellten Ebene A-A (Figur 5b). Die Gewindeeinsatz-Hülse 122 ist für eine Verbindung mit dem Antriebselement 110 der Figur 4 ausgelegt und unterscheidet sich im Wesentlichen dadurch von der Gewindeeinsatz-Hülse 22 der Figur 2, dass kein Gegenprofil mit Vertiefungen 33 in die Gewindeeinsatz-Hülse 122 eingebracht ist.

Figuren 6a bis c zeigen einen erfindungsgemäßen Gewindeeinsatz 134 gemäß einer zweiten erfindungsgemäßen Ausführungsform in einer Seitenansicht (Figur 6a), in einer Längsschnittansicht für einen Schnitt entlang der in Figur 6a dargestellten Ebene A-A (Figur 6b) und in einer Querschnittsansicht für einen Schnitt entlang der Figur 6a dargestellten Ebene B-B (Figur 6c). Der Gewindeeinsatz 134 umfasst die Gewindeeinsatz-Hülse 122 der Figur 5 und das Antriebselement 110 der Figur 4.

Bei dem Gewindeeinsatz 134 sind das Antriebselement 110 und die Gewindeeinsatz-Hülse 122 über eine stoffschlüssige Verbindung miteinander verbunden. Diese Verbindung ist geeignet, ein Drehmoment, wie zuvor beschrieben, vom Antriebselement 110 in einem führenden Bereich der Gewindeeinsatz-Hülse 122 in radiale Richtung auf die Gewindeeinsatz-Hülse 122 zu übertragen.

Beim Gewindeeinsatz 134, bei dem das Antriebselement 110 und die Gewindeeinsatz-Hülse 122 verbunden sind, fallen die Längsachse L des Antriebselements 110 und die Längsachse der Gewindeeinsatz-Hülse 122 zusammen und bilden eine Längsachse L des Gewindeeinsatzes 134, die zugleich eine Drehachse des Gewindeeinsatzes 134 und der Gewindeeinsatz-Hülse 122 ist.

Die stoffschlüssige Verbindung kann mithilfe eines Fügemittels, das sich über die glatten Flächenabschnitte 36 der äußeren Fläche 18 des Verbindungsabschnitts 16 verteilt und ausbreitet, zwischen dem Verbindungsabschnitt 16 und einer Innenfläche der Gewindeeinsatz-Hülse 122 hergestellt werden. Die stoffschlüssige Verbindung kann auch mithilfe eines Schweißprozesses hergestellt werden, wobei sich die beim Schweißen entstehende Schmelze entlang der glatten Flächenabschnitte 36 ausbreiten und verteilen kann, um eine zuverlässige Verbindung herzustellen.

In anderen nicht gezeigten Ausführungsformen kann auch die gesamte äußere Fläche 18 des Verbindungsabschnitts 16 glatt sein, ohne dass darin Kanten oder Profile vorgesehen sind.

In wieder anderen nicht gezeigten Ausführungsformen kann die gesamte äußere Fläche 18 des Verbindungsabschnitts 16 auch derart profiliert sein, dass keine glatten Flächenabschnitte 36, die sich in Längsrichtung erstrecken und zur Ausbreitung und Verteilung eines Fügemittels geeignet sind, vorgesehen sind. Bei diesen Ausführungsformen ist die Verbindung zwischen dem Antriebselement und der Gewindeeinsatz-Hülse vorzugsweise ausschließlich formschlüssig.

Beim Gewindeeinsatz 134 der Figur 6 weist das Außengewinde 40 des Antriebselements 110 dieselbe Steigung auf wie das Außengewinde 24 der Gewindeeinsatz-Hülse 22. Das Außengewinde 40 bildet eine kontinuierliche Fortsetzung des Außengewindes 24 in Richtung auf das führende Ende 28 des Antriebselements 110, das auch zugleich das führende Ende 28 des Gewindeeinsatzes 134 ist. Demnach bilden das Außengewinde 24 und das Außengewinde 40 zusammen ein kontinuierliches Gewinde des Gewindeeinsatzes 134, wobei der führende Teil dieses zusammengesetzten Gewindes durch das Außengewinde 40 des Antriebselements 110 gebildet wird.

Demnach kann beim Gewindeeinsatz 134 das Antriebselement 110 zum Gewindefurchen verwendet werden, wohingegen das Außengewinde 24 der Gewindeeinsatz-Hülse 122 zum Furchen ungeeignet sein kann. Daher kann das Antriebselement 110 besonders vorteilhaft in Kombination mit korrosionsbeständigen ungehärteten Gewindeeinsatz-Hülsen 122 verwendet werden, die aufgrund ihres Materials nicht zum Furchen geeignet sind. Mit anderen Worten kann der Gewindeeinsatz 134 trotz einer Korrosionsbeständigkeit seiner Gewindeeinsatz-Hülse 122 furchend in ein Bohrloch eingesetzt werden, wobei das korrosionsbeständige Außengewinde 124 in ein durch das Außengewinde 40 gefurchtes Innengewinde eingezogen oder nachgezogen wird.

Vorzugsweise verringert sich ein maximaler Außendurchmesser Dₘₐₓ des Gewindeabschnitts 34 in Längsrichtung auf das führende Ende 28 des Gewindeabschnitts 38, wie es in Figur 4b dargestellt ist. Weiterhin hat das Außengewinde 40 des Antriebselements 110 in einem führenden Bereich vorzugsweise Furchzähne 42, wie es in Figur 4a dargestellt ist. Der sich verjüngende Außendurchmesser und die Furchzähne erleichtern ein Gewindefurchen mithilfe des Antriebselements 110.

Weiterhin ist das Antriebselement 110 vorzugsweise aus einem härtbaren Material hergestellt und ist bei der Verwendung in dem Gewindeeinsatz 134 gehärtet, wodurch ein zuverlässiges Gewindefurchen mit einem Antriebselement 110 aus Metall ermöglicht oder verbessert werden kann.

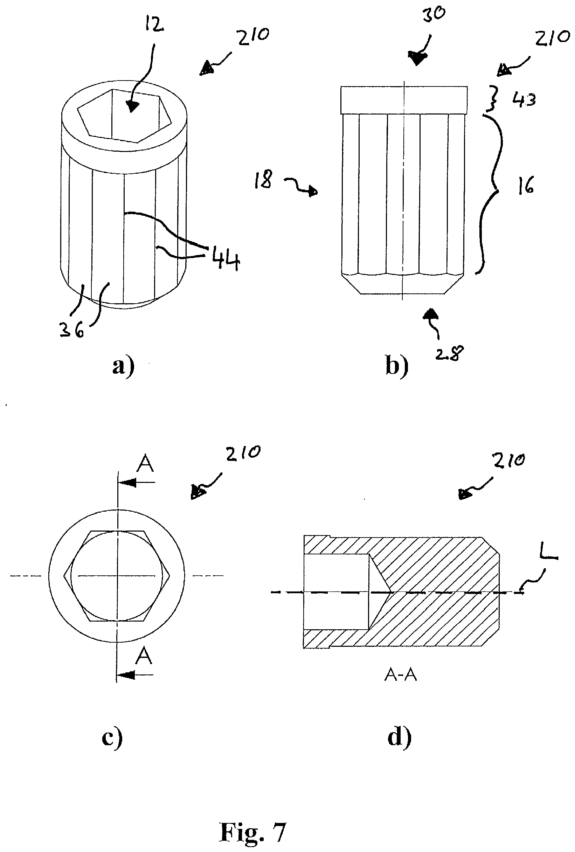

Figur 7 zeigt ein Antriebselement 210 gemäß einer dritten erfindungsgemäßen Ausführungsform in perspektivischer Außenansicht (Figur 7a), in Seitenansicht (Figur 7b), in Draufsicht (Figur 7c) sowie in einer Längsschnittansicht für einen Schnitt entlang der in Figur 7c dargestellten Ebene A-A (Figur 7d).

Das Antriebselement 210 eignet sich besonders gut für eine stoffschlüssige Verbindung zu einer Gewindeeinsatz-Hülse, beispielsweise der Gewindeeinsatz-Hülse 122 aus Figur 5.

Das Antriebselement 210 umfasst einen Verbindungsabschnitt 16 und einen axialen Sperrabschnitt 43 in Form eines zylindrischen Bundes. Der Sperrabschnitt 43 ist dichter an einem hinteren Ende 30 des Antriebselements 210 angeordnet als der Verbindungsabschnitt 16 und grenzt an den Verbindungsabschnitt 16 an.

Beim Herstellen einer stoffschlüssigen Verbindung kann der Sperrabschnitt 43 verhindern, dass ein Fügemittel, beispielsweise Kleber, Lot oder eine Schmelze, über das Antriebselement 210 hinaus in den inneren Bereich des Gewindeeinsatzes gelangt. Dadurch kann verhindert werden, dass ein Innengewinde der Gewindeeinsatz-Hülse des Gewindeeinsatzes unbrauchbar gemacht wird und für eine spätere Verankerung nicht mehr zur Verfügung steht.

Der Verbindungsabschnitt 16 hat eine äußere Fläche 18 mit einem Vielkantprofil, das über mehrere in Längsrichtung verlaufende Mantellinien 44 und über dazwischen liegende sich in Längsrichtung erstreckende glatte Flächenabschnitte 36 gebildet wird.

Die Außenform des Verbindungsabschnitts 16 des Antriebselements 210 ist zylindrisch bzw. in Längsrichtung translationssymmetrisch.

Wenn das Antriebselement 210 in eine entsprechende geeignete Gewindeeinsatz-Hülse, die eine im Wesentlichen zylindrische Innenfläche aufweist, eingesetzt wird, liegen die Mantellinien 44 an der Innenfläche der Gewindeeinsatz-Hülse an. Dadurch kann eine Verkippung des Antriebselements 210 relativ zur Gewindeeinsatz-Hülse verhindert werden und kann die Position des Antriebselements 210 in der Gewindeeinsatz-Hülse stabilisiert werden.

In dieser stabilisierten Position werden Kanäle zwischen den Flächenabschnitten 36 des Verbindungsabschnitts 36 und der Innenfläche der Gewindeeinsatz-Hülse gebildet, in die ein Fügemittel vom führenden Ende 28 in Richtung auf ein hinteres Ende 30 des Antriebselements 210 einfließen kann. Das Fügemittel kann auch aufgrund einer Kapillarwirkung in die gebildeten Kanäle hineingezogen werden.

Aufgrund des Vielkantaußenprofils, dessen Mantellinien die Position des Antriebselements 210 beim stoffschlüssigen Verbinden sichern, können die gebildeten Kanäle gleichmäßig um den Verbindungsabschnitt 16 herum ausgebildet werden. Dadurch kann eine sehr zuverlässige und starke stoffschlüssige Verbindung hergestellt werden.

Aufgrund des Sperrabschnitts 43, dessen Außenfläche in einem zugehörigen Gewindeeinsatz vorzugsweise vollständig oder nahezu vollständig an der Innenfläche der Gewindeeinsatz-Hülse anliegt, können die zuvor genannten Kanäle an der Grenze zwischen dem Sperrabschnitt 43 und dem Verbindungsabschnitt 16 verschlossen werden. Dadurch wird verhindert, dass das Fügemittel sich über den Verbindungsabschnitt 16 hinaus in Richtung auf das hintere Ende 30 des herzustellenden Gewindeeinsatzes ausbreitet.

Um ein besseres Einfließen des Fügemittels zu ermöglichen, kann am führenden Ende 28 des Antriebselements 210 eine entsprechende Phase vorgesehen sein, wie in den Figuren 7b und d dargestellt ist.

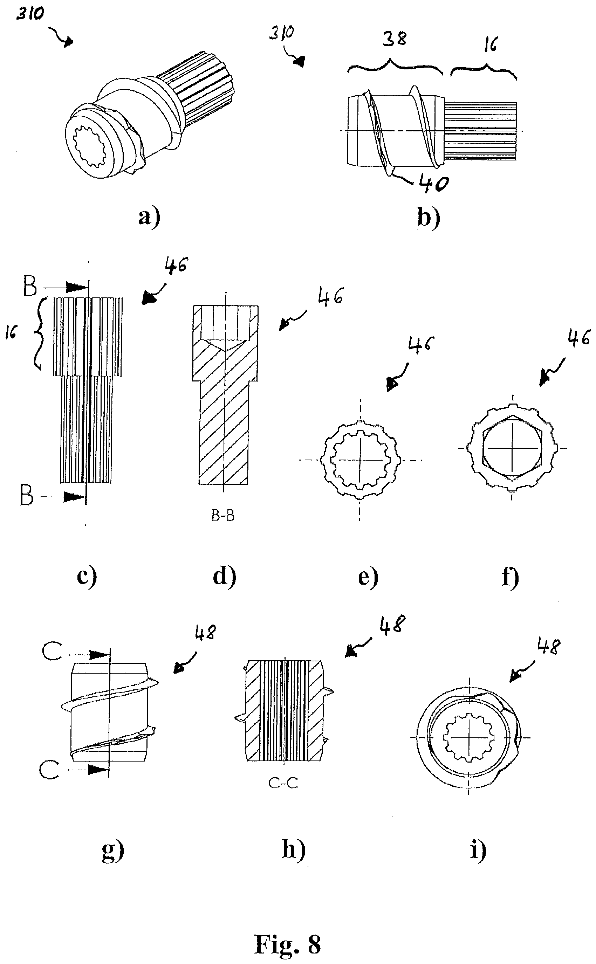

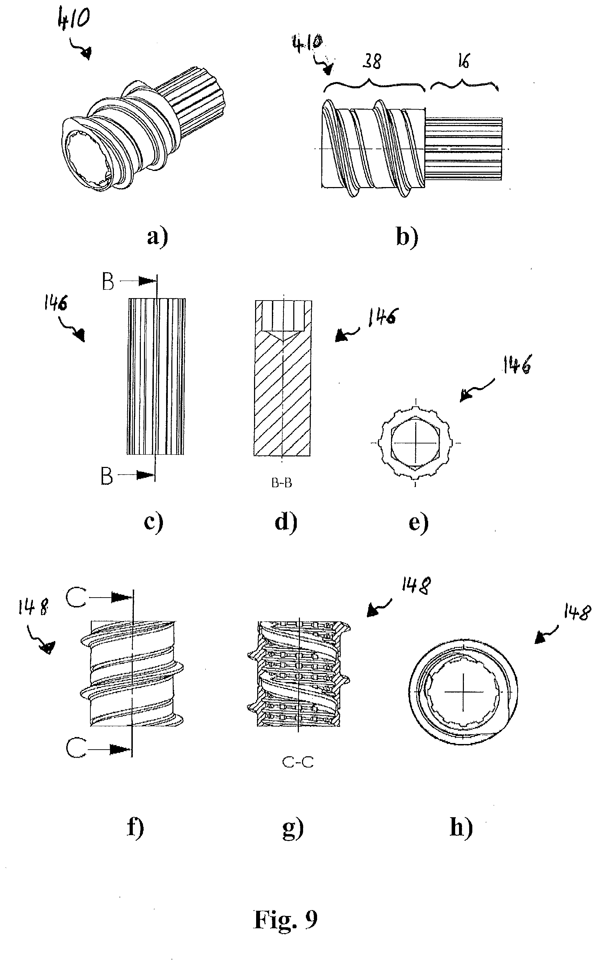

Die Figuren 8 und 9 zeigen ein Antriebselement 310, (410) gemäß einer Weiterbildung des Antriebselements 110 der Figur 4 in perspektivischer Außenansicht (Figur 8a, 9a) und in Seitenansicht (Figur 8b, 9b), das aus einem inneren Element 46, (146) und einem äußeren Element 48, (148) ausgebildet ist. Das äußere Element 48 hat die Form einer Hülse, die vorzugsweise massiv ausgebildet ist, das äußere Element 148 des Antriebselements 410 kann aus einem Profilband gewickelt sein. Das Element 48, (148) weist ein Innenprofil auf, das ein Gegenprofil zu einem Außenprofil des inneren Elements 46,(146) auf einem axialen Abschnitt im Bereich des führenden Endes bildet. Dadurch kann das äußere Element 48,(148) auf das innere Element 46,(146) nachdem beide Elemente 46,48 ,(146,148) getrennt voneinander hergestellt wurden, aufgeschoben werden und mit diesem verbunden werden.

Wie in der Figur 8c beispielsweise gezeigt ist, kann der Außendurchmesser des inneren Elements 46,(146) im Bereich des Verbindungsabschnitts 16 größer sein, als im Bereich des Gewindeabschnitts 38. Dadurch kann das äußere Element 48,(148) eine größere Querschnittsfläche aufweisen als eine zugehörige Gewindeeinsatzhülse 22, was die Stabilität des Antriebselementes 310,(410) beim Furchen des Gewindes steigern kann.

Die Figuren 8c bis f zeigen das innere Element 46 in einer Außenansicht (Figur 8c), in einer Längsschnittansicht für einen Schnitt entlang der in Figur 8c dargestellten Ebene B-B (Figur 8d), in einer Ansicht von unten (Figur 8e) sowie in einer Ansicht von oben (Figur 8f). Figuren 8g bis i zeigen das äußere Element 48 in einer Außenansicht (Figur 8g), in einer Längsschnittansicht für einen Schnitt entlang der in Figur 8g dargestellten Ebene C-C (Figur 8h) sowie in einer Ansicht von unten (Figur 8i).

Bei dem Antriebselement 310 wird der Verbindungsabschnitt 16 durch das innere Element 46 gebildet. Der radial äußere Teil des Gewindeabschnitts 38 wird durch das äußere Element 48 gebildet. Das innere Element 46 muss nicht zwangsläufig zwei unterschiedliche Außendurchmesser auf unterschiedlichen axialen Abschnitten haben, sondern kann über seine gesamte Länge einen Querschnitt mit einem konstanten Außenprofil haben bzw. in Längsrichtung translationssymmetrisch sein, wie es in Figur 9c dargestellt ist. Im gefügten Zustand (Figuren 8a und b) ist der Außendurchmesser des Antriebselements 310 - ebenso wie beim Antriebselement 110 - im Bereich des Gewindeabschnitts 38 größer als im Bereich des Verbindungsabschnitts 16, so dass das Außengewinde 40 des Gewindeabschnitts 38 das Außengewinde 24 einer zugehörigen Gewindeeinsatzhülse 22 fortsetzen kann.

Die Figuren 9c bis e zeigen das innere Element 146 in einer Außenansicht (Figur 9c), in einer Längsschnittansicht für einen Schnitt entlang der in Figur 9c dargestellten Ebene B-B (Figur 9d) sowie in einer Ansicht von oben (Figur 9e). Figuren 9f bis h zeigen das äußere Element 148 in einer Außenansicht (Figur 9f), in einer Längsschnittansicht für einen Schnitt entlang der in Figur 9f dargestellten Ebene C-C (Figur 9g) sowie in einer Ansicht von unten (Figur 9h).

Bei den Antriebselementen 310 und 410 sind das innere Element 46 bzw. 146 und das äußere Element 48 bzw. 148 vorzugsweise mit einer der zuvor beschriebenen Stoff-, kraft- und/oder formschlüssigen Verbindungen verbunden.

Die Funktionsweise und der Einsatzbereich der Antriebselemente 310, 410 ähnelt denjenigen der zuvor beschriebenen Antriebselemente 10, 110, 210, so dass diese hier nicht nochmals beschrieben werden, sondern auf die entsprechende vorherige Beschreibung verwiesen wird.

Das äußere Element 48,(148) kann die Gestalt eines axialen Abschnitts der zugehörigen fortzusetzenden Gewindeeinsatz-Hülse 22 haben, beispielsweise die Gestalt des führenden Abschnitts 32 der Figur 2b, wobei es sich in einer Materialeigenschaft, insbesondere seiner Härte, und in der Querschnittsfläche von der Gewindeeinsatz-Hülse 22 unterscheiden kann.

Anders als bei einer einstückigen Ausbildung, kann aufgrund der mehrstückigen Ausbildung der Antriebselemente 310, 410 das äußere Element 48, (148) aus einem härtbaren Material hergestellt werden und gehärtet sein, wohingegen das innere Element 46, (146) aus einem anderen Material hergestellt sein kann und nicht gehärtet sein muss. Wenn das innere Element 46, (146) aus einem ungehärteten und/oder nicht härtbaren Material besteht, kann es eine geringe Sprödigkeit und damit eine hohe Stabilität mit geringer Bruchgefahr aufweisen. Zugleich kann lediglich das äußere Element 48, (148) gehärtet sein und dadurch dem Gewindeeinsatz, der beispielsweise eine korrosionsbeständige nicht zum Furchen geeignete Gewindeeinsatz-Hülse umfassen kann, die Fähigkeit zum Gewindefurchen verleihen.

Aufgrund der zweistückigen Ausbildung können das innere Element 46, (146) und das äußere Element 48, (148) mithilfe unterschiedlicher Herstellungsverfahren gefertigt werden. Das innere Element 46, (146) kann beispielsweise durch eine subtraktive Bearbeitung eines massiven Blocks hergestellt sein. Das äußere Element 48 des Antriebselements 310 kann ebenfalls durch eine subtraktive Bearbeitung eines massiven Blocks hergestellt sein. Zudem kann es gepresst oder gesintert sein.

Das äußere Element 148 des Antriebselements 410 kann aus einem Profilband gewickelt sein. Nach dem Wickeln kann es gehärtet werden.

In den zuvor beschriebenen beispielhaften Ausführungsformen 10, 110 und 210 von Antriebselementen haben die Verbindungsabschnitte 16 eine zylindrische Außenform, die nicht wesentlich von einer Kreiszylinderform abweicht. Dadurch eigneten sich diese Verbindungsabschnitte besonders gut für eine Verbindung zu einer kreiszylindrischen oder im Wesentlichen kreiszylindrischen Innenfläche einer Gewindeeinsatz-Hülse. Die vorliegende Erfindung umfasst jedoch auch Antriebselemente, die nicht gezeigt sind und bei denen der Verbindungsabschnitt nicht oder nicht vollständig zylindrisch ist, beispielsweise aufgrund von Einbuchtungen und/oder Vorsprüngen, die nicht in Längsrichtung translationssymmetrisch sind.

Unabhängig von der Außenform des Antriebselements oder seines Verbindungsabschnitts, ist jedoch bei allen zur Erfindung gehörigen Antriebselementen ein axialer Abschnitt vorhanden, indem Material entlang einer Kreislinie um die Längsachse herum angeordnet ist, ohne dass in diesem Abschnitt eine Materialunterbrechung, die sich von der Längsachse in radiale Richtung bis zur Außenkontur erstreckt und zu einer geringeren Formstabilität führen würde, vorhanden ist.

Es wird darauf hingewiesen, dass die vorgenannten Ausführungsformen lediglich beispielhaft für die vorliegende Erfindung sind und die beschriebenen Merkmale in unterschiedlichen Kombinationen von Bedeutung sein können und solche Kombinationen ebenfalls von der vorliegenden Erfindung umfasst sind. Beispielsweise kann der Sperrabschnitt 43 auch in Kombination mit dem Verbindungsabschnitt 16 des Antriebselements 10 der Figur 1 verwendet werden. Ebenso kann für das Antriebselement 110 der Figur 4 anstatt eines Verbindungsabschnitts mit einem vielkantförmigen Außenprofil auch ein Verbindungsabschnitt mit dem Profil des Verbindungsabschnitts 16 der Figur 1 verwendet werden.

Der Schutzbereich der vorliegenden Erfindung wird allein durch die beigefügten Ansprüche bestimmt.

### BEZUGSZEICHENLISTE

- 10, 110, 210, 310, 410: Antriebselement
- 12: Aufnahme
- 14: Antriebsprofil
- 16: Verbindungsabschnitt
- 18: äußere Fläche
- 20: Vorsprünge
- 22, 122: Gewindeeinsatz-Hülse
- 24: Außengewinde
- 26: Innengewinde
- 28: führendes Ende
- 30: hinteres Ende
- 32: führender Bereich
- 33: Vertiefungen
- 34, 134: Gewindeeinsatz
- 36: glatter Flächenabschnitt
- 38: Gewindeabschnitt
- 40: Außengewinde
- 42: Furchzähne
- 43: Sperrabschnitt
- 44: Mantellinien
- 46, 146: inneres Element
- 48, 148: äußeres Element

## Patentansprüche

1. Gewindeeinsatz (34, 134) zum Einsetzen in ein Bohrloch umfassend
- eine Gewindeeinsatz-Hülse (22, 122) mit einem Außengewinde (24),
- ein Antriebselement (10, 110, 210, 310, 410) zur Übertragung eines Drehmomentes auf die Gewindeeinsatz-Hülse (22, 122), wobei das Antriebselement (10, 110, 210, 310, 410) Folgendes umfasst:
- eine Aufnahme (12) mit einem Antriebsprofil (14), in die entlang einer Längsachse (L) des Antriebselements ein Antriebswerkzeug zur Übertragung eines Drehmomentes vom Antriebswerkzeug auf das Antriebselement aufgenommen werden kann, wobei die Längsachse durch das Zentrum des Antriebsprofils verläuft und einer Drehachse des Antriebselements (10, 110, 210, 310, 410) entspricht, um die sich das Antriebselement bei der Drehmomentübertragung vom Antriebswerkzeug auf das Antriebselement dreht,
- einen axialen Verbindungsabschnitt (16) mit einer äußeren Fläche (18) zur Ausbildung einer stoffschlüssigen, formschlüssigen und/oder kraftschlüssigen Verbindung zu der Gewindeeinsatz-Hülse (22, 122), wobei über die äußere Fläche, wenn eine Verbindung zu einer Gewindeeinsatz-Hülse ausgebildet ist, ein Drehmoment vom Antriebselement (10, 110, 210, 310, 410) auf die Gewindeeinsatz-Hülse (22, 122) übertragbar ist,
wobei das Antriebselement (10, 110, 210, 310, 410) zumindest abschnittsweise eine Querschnittsfläche aufweist, in die eine Kreislinie (K) mit einem Zentrum, durch das die Drehachse (L) verläuft, einbeschrieben werden kann,
wobei der Verbindungsabschnitt (16) in der führenden Hälfte, vorzugsweise am führenden Ende (28) der Gewindeeinsatz-Hülse (22, 122) innerhalb der Gewindeeinsatz-Hülse angeordnet ist, und über eine formschlüssige, stoffschlüssige und/oder kraftschlüssige Verbindung mit der Gewindeeinsatz-Hülse derart verbunden ist, dass ein über das Antriebsprofil (14) auf das Antriebselement übertragenes Drehmoment vom Antriebselement in einem führenden Bereich (32) auf die Gewindeeinsatz-Hülse übertragen wird,
wobei das Außengewinde (24) der Gewindeeinsatzhülse (22) in dem führenden Bereich (32) vorliegt.

2. Gewindeeinsatz (34, 134) zum Einsetzen in ein Bohrloch umfassend
- eine Gewindeeinsatz-Hülse (22, 122) mit einem Außengewinde (24),
- ein Antriebselement (10, 110, 210, 310, 410) zur Übertragung eines Drehmomentes auf die Gewindeeinsatz-Hülse (22, 122), wobei das Antriebselement (10, 110, 210, 310, 410) Folgendes umfasst:
- eine Aufnahme (12) mit einem Antriebsprofil (14), in die entlang einer Längsachse (L) des Antriebselements ein Antriebswerkzeug zur Übertragung eines Drehmomentes vom Antriebswerkzeug auf das Antriebselement aufgenommen werden kann, wobei die Längsachse durch das Zentrum des Antriebsprofils verläuft und einer Drehachse des Antriebselements (10, 110, 210, 310, 410) entspricht, um die sich das Antriebselement bei der Drehmomentübertragung vom Antriebswerkzeug auf das Antriebselement dreht,
- einen axialen Verbindungsabschnitt (16) mit einer äußeren Fläche (18) zur Ausbildung einer stoffschlüssigen, formschlüssigen und/oder kraftschlüssigen Verbindung zu der Gewindeeinsatz-Hülse (22, 122), wobei über die äußere Fläche, wenn eine Verbindung zu einer Gewindeeinsatz-Hülse ausgebildet ist, ein Drehmoment vom Antriebselement (10, 110, 210, 310, 410) auf die Gewindeeinsatz-Hülse (22, 122) übertragbar ist,
wobei das Antriebselement (10, 110, 210, 310, 410) zumindest abschnittsweise eine Querschnittsfläche aufweist, in die eine Kreislinie (K) mit einem Zentrum, durch das die Drehachse (L) verläuft, einbeschrieben werden kann,
wobei der Verbindungsabschnitt (16) in der führenden Hälfte, vorzugsweise am führenden Ende (28) der Gewindeeinsatz-Hülse (22, 122) innerhalb der Gewindeeinsatz-Hülse angeordnet ist, und über eine formschlüssige, stoffschlüssige und/oder kraftschlüssige Verbindung mit der Gewindeeinsatz-Hülse derart verbunden ist, dass ein über das Antriebsprofil (14) auf das Antriebselement übertragenes Drehmoment vom Antriebselement auf die Gewindeeinsatz-Hülse übertragen wird, wobei die Länge des Verbindungsabschnitts (16) dem Ein- bis Dreifachen seines Durchmessers entspricht.

3. Gewindeeinsatz (34, 134) zum Einsetzen in ein Bohrloch umfassend
- eine Gewindeeinsatz-Hülse (22, 122) mit einem Außengewinde (24),
- ein Antriebselement (10, 110, 210, 310, 410) zur Übertragung eines Drehmomentes auf die Gewindeeinsatz-Hülse (22, 122), wobei das Antriebselement (10, 110, 210, 310, 410) Folgendes umfasst:
- eine Aufnahme (12) mit einem Antriebsprofil (14), in die entlang einer Längsachse (L) des Antriebselements ein Antriebswerkzeug zur Übertragung eines Drehmomentes vom Antriebswerkzeug auf das Antriebselement aufgenommen werden kann, wobei die Längsachse durch das Zentrum des Antriebsprofils verläuft und einer Drehachse des Antriebselements (10, 110, 210, 310, 410) entspricht, um die sich das Antriebselement bei der Drehmomentübertragung vom Antriebswerkzeug auf das Antriebselement dreht,
- einen axialen Verbindungsabschnitt (16) mit einer äußeren Fläche (18) zur Ausbildung einer stoffschlüssigen, formschlüssigen und/oder kraftschlüssigen Verbindung zu der Gewindeeinsatz-Hülse (22, 122), wobei über die äußere Fläche, wenn eine Verbindung zu einer Gewindeeinsatz-Hülse ausgebildet ist, ein Drehmoment vom Antriebselement (10, 110, 210, 310, 410) auf die Gewindeeinsatz-Hülse (22, 122) übertragbar ist,
wobei das Antriebselement (10, 110, 210, 310, 410) zumindest abschnittsweise eine Querschnittsfläche aufweist, in die eine Kreislinie (K) mit einem Zentrum, durch das die Drehachse (L) verläuft, einbeschrieben werden kann,
wobei der Verbindungsabschnitt (16) in der führenden Hälfte, vorzugsweise am führenden Ende (28) der Gewindeeinsatz-Hülse (22, 122) innerhalb der Gewindeeinsatz-Hülse angeordnet ist, und über eine formschlüssige, stoffschlüssige und/oder kraftschlüssige Verbindung mit der Gewindeeinsatz-Hülse derart verbunden ist, dass ein über das Antriebsprofil (14) auf das Antriebselement übertragenes Drehmoment vom Antriebselement auf die Gewindeeinsatz-Hülse übertragen wird,
wobei das Antriebselement (110, 310, 410) weiterhin einen axialen Gewindeabschnitt (38) mit einem Außengewinde (40) aufweist, wobei der Gewindeabschnitt (38) näher an einem führenden Ende (28) des Antriebselements angeordnet ist als der Verbindungsabschnitt (16), und wobei ein Gewindeinnendurchmesser (Dᵢ) des Gewindeabschnitts (38) größer als ein Außendurchmesser (Dₐ) des Verbindungsabschnitts (16) ist.

4. Gewindeeinsatz (34, 134) nach einem der vorhergehenden Ansprüche, bei dem die äußere Fläche des Verbindungsabschnitts (16) des Antriebselements (10, 110, 210, 310, 410) glatt und/oder profiliert ist, und/oder
das aus einem massiven Werkstück gefertigt ist.

5. Gewindeeinsatz (34, 134) nach einem der vorhergehenden Ansprüche, bei dem die äußere Fläche (18) des Verbindungsabschnitts (16) des Antriebselements (10, 110, 210, 310, 410) radial nach außen vorstehende Vorsprünge (20) für eine Drehmomentübertragung über eine formschlüssige Verbindung zur Gewindeeinsatz-Hülse (22, 122) aufweist,
wobei sich die Vorsprünge (20) vorzugsweise über den Verbindungsabschnitt (16) in Längsrichtung erstrecken.

6. Gewindeeinsatz (34, 134) nach einem der vorhergehenden Ansprüche, bei dem die Außenform des Verbindungsabschnitts (16) des Antriebselements (10, 110, 210, 310, 410) in Längsrichtung translationssymmetrisch ist.

7. Gewindeeinsatz (34, 134) nach einem der vorhergehenden Ansprüche, bei dem das Antriebsprofil (14) der Aufnahme (12) ein Innensechsrundprofil, ein Innenvielkantprofil oder ein Innenpolygonprofil ist.

8. Gewindeeinsatz (34, 134) nach einem der vorhergehenden Ansprüche, bei dem die Aufnahme (12) durch ein Durchgangsloch oder ein Sackloch gebildet ist, wobei sich das Durchgangsloch vorzugsweise zumindest abschnittsweise entlang der Längsrichtung verjüngt und/oder eine Schulter aufweist.

9. Gewindeeinsatz (34, 134) nach einem der vorhergehenden Ansprüche, bei dem die äußere Fläche (18) des Verbindungsabschnitts (16) des Antriebselements (10, 110, 210, 310, 410)
- drei oder mehr in Längsrichtung verlaufende Mantellinien (44) aufweist, die auf einer gedachten einhüllenden Fläche der Form eines senkrechten Kreiszylinders liegen, und
- auf Flächenabschnitten (36) zwischen jeweils zwei radial benachbarten der Mantellinien (44) von der gedachten einhüllenden Fläche beabstandet ist, so dass zwischen der gedachten einhüllenden Fläche und der äußeren Fläche (18) des Verbindungsabschnitts (16) gedachte Kanäle gebildet werden,
wobei die äußere Fläche (18) des Verbindungsabschnitts vorzugsweise ein Außenvielkantprofil oder ein Außenpolygonprofil aufweist, und/oder
wobei das Antriebselement (10) vorzugsweise einen axialen Sperrabschnitt (43) aufweist, der an den Verbindungsabschnitt (16) angrenzt und der im Bereich der Grenze zu den gedachten Kanälen einen geringeren Abstand oder keinen Abstand von der fortgesetzten gedachten einhüllenden Fläche aufweist.

10. Gewindeeinsatz (34, 134) nach einem der Ansprüche 3 bis 9,
wobei der maximale Außendurchmesser (Dₘₐₓ) des Gewindeabschnitts (38) in Richtung auf das führende Ende (28) des Antriebselements kleiner wird, und/oder wobei das Außengewinde (40) vorzugsweise mindestens einen halben Gewindegang,
besonders vorzugsweise mindestens einen ganzen Gewindegang umfasst, und/oder wobei das Außengewinde des Gewindeabschnitts vorzugsweise Furchzähne (42) umfasst, und/oder
wobei das Antriebselement (310, 410) vorzugsweise mehrstückig mit einem inneren Element (46, 146) mit dem Verbindungsabschnitt (16) und mit einem äußeren Element (48, 148) zur Ausbildung des Gewindeabschnitts (38), welches das innere Element (46, 146) zumindest abschnittsweise umgibt, ausgebildet ist.

11. Gewindeeinsatz (34, 134) nach einem der Ansprüche 1 bis 9, wobei die Länge des Verbindungsabschnitts des Antriebselements (10, 110, 210, 310, 410) der Länge des Antriebselements (10, 110, 210, 310, 410) entspricht.

12. Gewindeeinsatz (34, 134) nach einem der vorhergehenden Ansprüche, wobei das Antriebselement (10, 110, 210, 310, 410) einstückig ausgebildet ist und/oder vollständig oder teilweise aus einem härtbaren Metall ausgebildet ist.

13. Gewindeeinsatz (34, 134) nach einem der vorhergehenden Ansprüche, bei dem die Innenseite der Gewindeeinsatz-Hülse mehrere Vertiefungen (33) umfasst, die entsprechend der radial nach außen vorstehenden Vorsprünge (20) des Verbindungsabschnitts geformt und angeordnet sind, wobei die Vorsprünge in den Vertiefungen aufgenommen sind, so dass eine formschlüssige Verbindung besteht.

14. Gewindeeinsatz (34, 134) nach einem der vorhergehenden Ansprüche, bei der zwischen der äußeren Fläche (18) des Verbindungsabschnitts und der Gewindeeinsatz-Hülse eine stoffschlüssige Verbindung besteht, die durch Löten, Kleben oder Schweißen gebildet ist.

15. Gewindeeinsatz (34, 134) nach einem der vorhergehenden Ansprüche, bei dem die Gewindeeinsatz-Hülse zumindest teilweise aus einem anderen Material als das Antriebselement (10, 110, 210, 310, 410) gebildet ist, wobei die Gewindeeinsatz-Hülse vorzugsweise aus einem korrosionsbeständigen Metall, besonders vorzugsweise aus rostfreiem Stahl oder aus Kunststoff besteht oder eines dieser Materialen umfasst, und/oder
bei dem die Gewindeeinsatz-Hülse einen gewickelten Metallstreifen umfasst oder daraus besteht, und/oder bei dem die Gewindeeinsatz-Hülse ein Innengewinde (26) aufweist.

16. Gewindeeinsatz (34, 134) nach einem der Ansprüche 3 bis 15, bei dem das Außengewinde (40) auf dem Gewindeabschnitt (38) das Außengewinde (24) der Gewindeeinsatz-Hülse (22, 122) fortsetzt und vorzugsweise dieselbe Steigung wie das Außengewinde der Gewindeeinsatz-Hülse aufweist.

17. Gewindeeinsatz (34, 134) nach Anspruch 15 oder 16, bei dem der Verbindungsabschnitt (16) ein Außengewinde aufweist, das dem Innengewinde (26) der Gewindeeinsatz-Hülse entspricht, und wobei zwischen dem Verbindungsabschnitt und der Gewindeeinsatz-Hülse eine formschlüssige Schraubverbindung besteht.

## Claims

1. A threaded insert (34, 134) for inserting into a bored hole comprising
- a threaded insert sleeve (22, 122) with an external thread (24),
- a drive element (10, 110, 210, 310, 410) for transmitting a torque to the threaded insert sleeve (22, 122), wherein the drive element (10, 110, 210, 310, 410) comprises:
- a receptacle (12) with a drive profile (14), in which along a longitudinal axis (L) of the drive element a drive tool for transmitting a torque from the drive tool to the drive element can be received, wherein the longitudinal axis passes through the centre of the drive profile and corresponds to a rotation axis of the drive element (10, 110, 210, 310, 410), about which the drive element rotates when transmitting the torque from the drive tool to the drive element,
- an axial connecting section (16) with an outer surface (18) for forming a materially bonded, form-fitting and/or force-fitting connection to the threaded insert sleeve (22, 122), wherein via the outer surface, when a connection to a threaded insert sleeve is formed, a torque can be transmitted from the drive element (10, 110, 210, 310, 410) to the threaded insert sleeve (22, 122),
wherein the drive element (10, 110, 210, 310, 410), at least in some sections, comprises a cross-sectional area in which a circular line (K) can be inscribed with a centre, through which the rotational axis (L) passes.
wherein the connecting section (16) is arranged in the leading half, preferably at the leading end (28) of the threaded insert sleeve (22, 122) inside the threaded insert sleeve, and is connected via a positive-fitting, materially bonded and/or force-fitting connection to the threaded insert sleeve, in such a way that a torque transmitted to the drive element via the drive profile (14) is transmitted from the drive element in a leading area (32) onto the threaded insert sleeve, wherein the external thread (24) of the threaded insert sleeve is present in said leading area.

2. A threaded insert (34, 134) for inserting into a bored hole comprising
- a threaded insert sleeve (22, 122) with an external thread (24),
- a drive element (10, 110, 210, 310, 410) for transmitting a torque to the threaded insert sleeve (22, 122), wherein the drive element (10, 110, 210, 310, 410) comprises,
- a receptacle (12) with a drive profile (14), in which along a longitudinal axis (L) of the drive element a drive tool for transmitting a torque from the drive tool to the drive element can be received, wherein the longitudinal axis passes through the centre of the drive profile and corresponds to a rotation axis of the drive element (10, 110, 210, 310, 410), about which the drive element rotates when transmitting the torque from the drive tool to the drive element,
- an axial connecting section (16) with an outer surface (18) for forming a materially bonded, form-fitting and/or force-fitting connection to the threaded insert sleeve (22, 122), wherein via the outer surface, when a connection to a threaded insert sleeve is formed, a torque can be transmitted from the drive element (10, 110, 210, 310, 410) to the threaded insert sleeve (22, 122),
wherein the drive element (10, 110, 210, 310, 410), at least in some sections, comprises a cross-sectional area in which a circular line (K) can be inscribed with a centre, through which the rotational axis (L) passes,
wherein the connecting section (16) is arranged in the leading half, preferably at the leading end (28) of the threaded insert sleeve (22, 122) inside the threaded insert sleeve, and is connected via a positive-fitting, materially bonded and/or force-fitting connection to the threaded insert sleeve, in such a way that a torque transmitted to the drive element via the drive profile (14) is transmitted from the drive element onto the threaded insert sleeve, wherein the length of the connecting section (16) is onefold to threefold of its diameter.

3. A threaded insert (34, 134) for inserting into a bored hole comprising
- a threaded insert sleeve (22, 122) with an external thread (24),
- a drive element (10, 110, 210, 310, 410) for transmitting a torque to the threaded insert sleeve (22, 122), wherein the drive element (10, 110, 210, 310, 410) comprises:
- a receptacle (12) with a drive profile (14), in which along a longitudinal axis (L) of the drive element a drive tool for transmitting a torque from the drive tool to the drive element can be received, wherein the longitudinal axis passes through the centre of the drive profile and corresponds to a rotation axis of the drive element (10, 110, 210, 310, 410), about which the drive element rotates when transmitting the torque from the drive tool to the drive element,
- an axial connecting section (16) with an outer surface (18) for forming a materially bonded, form-fitting and/or force-fitting connection to the threaded insert sleeve (22, 122), wherein via the outer surface, when a connection to a threaded insert sleeve is formed, a torque can be transmitted from the drive element (10, 110, 210, 310, 410) to the threaded insert sleeve (22, 122),
wherein the drive element (10, 110, 210, 310, 410), at least in some sections, comprises a cross-sectional area in which a circular line (K) can be inscribed with a centre, through which the rotational axis (L) passes.
wherein the connecting section (16) is arranged in the leading half, preferably at the leading end (28) of the threaded insert sleeve (22, 122) inside the threaded insert sleeve, and is connected via a positive-fitting, materially bonded and/or force-fitting connection to the threaded insert sleeve, in such a way that a torque transmitted to the drive element via the drive profile (14) is transmitted from the drive element onto the threaded insert sleeve,
wherein the drive element (110, 310, 410) further has an axial threaded section (38) with an outer thread (40), wherein the threaded section (38) is arranged closer to the leading end (28) than the connecting section (16), and wherein an inner thread diameter (D₁) of the threaded section (38) is larger than an outer diameter (Dₐ) of the connecting section (16).

4. The threaded insert (34, 134) according to any of the preceding claims, in which the outer surface of the connecting section (16) of the drive element (10, 110, 210, 310, 410) is smooth and/or profiled, and/or
which is fabricated from a solid workpiece.

5. The threaded insert (34, 134) according to any of the preceding claims, in which the outer surface (18) of the connecting section (16) of the drive element (10, 110, 210, 310, 410) comprises projections (20) protruding radially outwards in order to provide a torque transmission via a positive-fitting connection to the threaded insert sleeve (22, 122),
wherein the projections (20) preferably extend along the connecting section (16) in a longitudinal direction.

6. The threaded insert (34, 134) according to any of the preceding claims, in which the outer shape of the connecting section (16) of the drive element (10, 110, 210, 310, 410) is translationally symmetric in the longitudinal direction.

7. The threaded insert (34, 134) according to any of the preceding claims, in which the drive profile (14) of the receptacle (12) is an internal hexalobular profile, an internal polyhedral profile or an internal polygonal profile.

8. The threaded insert (34, 134) according to any of the preceding claims, in which the receptacle (12) is formed by a through hole or a blind hole, wherein the through hole is preferably tapered, at least in some sections, along the longitudinal direction and/or has a shoulder.

9. The threaded insert (34, 134) according to any of the preceding claims, in which the outer surface (18) of the connecting section (16) of the drive element (10, 110, 210, 310, 410)
- comprises three or more surface lines (44) extending in a longitudinal direction, which lie on an imaginary envelope surface having the form of a perpendicular circular cylinder, and
- is spaced apart from the imaginary envelope surface on surface sections (36), each of which is between two radially adjacent surface lines (44), so that imaginary channels are formed between the imaginary bounding surface and the outer surface (18) of the connecting section (16),
wherein the outer surface (18) of the connecting section preferably has an outer polyhedral profile or an outer polygonal profile, and/or
wherein the drive element (10) preferably comprises an axial locking section (43), which adjoins the connecting section (16) and which in the area of the boundary with the imaginary channels is spaced a smaller distance apart or no distance apart from the continuation of the imaginary envelope surface.

10. The threaded insert (34, 134) according to any one of claims 3 to 9,
wherein the maximum outer diameter (Dₘₐₓ) of the threaded section (38) becomes smaller in the direction of the leading end (28) of the drive element, and/or
wherein the outer thread (40) preferably comprises at least half a turn of the thread, particularly preferably at least one whole turn of the thread, and/or
wherein the outer thread of the threaded section preferably comprises self-tapping teeth (42), and/or
wherein the drive element (310, 410) is preferably constructed of multiple pieces with an inner element (46, 146) having the connecting section (16) and with an outer element (48, 148) for forming the threaded section (38), which surrounds the inner element (46, 146) at least in some sections.

11. The threaded insert (34, 134) according to any of claims 1 to 9, wherein the length of the connecting section of the drive element (10, 110, 210, 310, 410) matches the length of the drive element (10, 110, 210, 310, 410).

12. The threaded insert (34, 134) according to any of the preceding claims, wherein the drive element (10, 110, 210, 310, 410) is constructed integrally and/or wholly or partly from a hardenable metal.

13. The threaded insert (34, 134) according to any of the preceding claims, in which the inner side of the threaded insert sleeve comprises a plurality of recesses (33), which are shaped and arranged in correspondence with the radially outwardly protruding projections (20) of the connecting section, wherein the projections are received in the recesses so that a positive-fitting connection exists.

14. The threaded insert (34, 134) according to any of the preceding claims, in which between the outer surface (18) of the connecting section and the threaded insert sleeve a materially bonded connection exists, which is formed by soldering, bonding or welding.

15. The threaded insert (34, 134) according to any of the preceding claims, in which the threaded insert sleeve is formed at least partially from a different material than the drive element (10, 110, 210, 310, 410), wherein the threaded insert sleeve preferably consists of a corrosion-resistant metal, particularly preferably of stainless steel or plastic, or comprises one of these materials, and/or
in which the threaded insert sleeve comprises a wound metallic strip or consists thereof, and/or in which the threaded insert sleeve comprises an internal thread (26).

16. The threaded insert (34, 134) according to any one of claims 3 to 15, in which the external thread (40) on the threaded section (38) continues the external thread (24) of the threaded insert sleeve (22, 122) and preferably has the same pitch as the external thread of the threaded insert sleeve

17. The threaded insert (34, 134) according to claim 15 or 16, in which the connecting section (16) comprises an external thread, which corresponds to the internal thread (26) of the threaded insert sleeve, and wherein between the connecting section and the threaded insert sleeve a positive-fitting screw connection is formed.

## Revendications

1. Insert fileté (34, 134) destiné à être inséré dans un trou, comprenant
- un manchon d'insert fileté (22, 122) avec un filetage externe (24),
- un élément d'entraînement (10, 110, 210, 310, 410) pour la transmission d'un couple au manchon d'insert fileté (22, 122), dans lequel l'élément d'entraînement (10, 110, 210, 310, 410) comprend ce qui suit :
- un logement (12) avec un profilé d'entraînement (14), dans lequel, le long d'un axe longitudinal (L) de l'élément d'entraînement, peut être logé un outil d'entraînement pour la transmission d'un couple de l'outil d'entraînement à l'élément d'entraînement, dans lequel l'axe longitudinal passe par le centre du profilé d'entraînement et correspond à un axe de rotation de l'élément d'entraînement (10, 110, 210, 310, 410), autour duquel l'élément d'entraînement tourne lors de la transmission du couple de l'outil d'entraînement à l'élément d'entraînement,
- une portion de liaison axiale (16) avec une surface externe (18) pour la formation d'une liaison par continuité de matière, par complémentarité de forme et/ou par force avec le manchon d'insert fileté (22, 122), dans lequel, par l'intermédiaire de la surface externe, lorsqu'une liaison est établie avec un manchon d'insert fileté, un couple peut être transmis de l'élément d'entraînement (10, 110, 210, 310, 410) vers le manchon d'insert fileté (22, 122),
dans lequel l'élément d'entraînement (10, 110, 210, 310, 410) présente, au moins à certains endroits, une surface de section transversale dans laquelle une ligne circulaire (K), avec un centre par lequel passe l'axe de rotation (L), peut être inscrite,
dans lequel la portion de liaison (16), dans la moitié de guidage, de préférence au niveau de l'extrémité de guidage (28) du manchon d'insert fileté (22, 122), est disposée à l'intérieur du manchon d'insert fileté et est reliée, par l'intermédiaire d'une liaison par continuité de matière, par complémentarité de forme et/ou par force avec le manchon d'insert fileté de façon à ce qu'un couple transmis à l'élément d'entraînement par l'intermédiaire du profilé d'entraînement (14) soit transmis, dans une partie de guidage (32), de l'élément d'entraînement au manchon d'insert fileté,
dans lequel le filetage externe (24) du manchon d'insert fileté (22) se trouve dans la partie de guidage (32).

2. Insert fileté (34, 134) destiné à être inséré dans un trou, comprenant
- un manchon d'insert fileté (22, 122) avec un filetage externe (24),
- un élément d'entraînement (10, 110, 210, 310, 410) pour la transmission d'un couple au manchon d'insert fileté (22, 122), dans lequel l'élément d'entraînement (10, 110, 210, 310, 410) comprend ce qui suit :
- un logement (12) avec un profilé d'entraînement (14), dans lequel, le long d'un axe longitudinal (L) de l'élément d'entraînement, peut être logé un outil d'entraînement pour la transmission d'un couple de l'outil d'entraînement à l'élément d'entraînement, dans lequel l'axe longitudinal passe par le centre du profilé d'entraînement et correspond à un axe de rotation de l'élément d'entraînement (10, 110, 210, 310, 410), autour duquel l'élément d'entraînement tourne lors de la transmission du couple de l'outil d'entraînement à l'élément d'entraînement,
- une portion de liaison axiale (16) avec une surface externe (18) pour la formation d'une liaison par continuité de matière, par complémentarité de forme et/ou par force avec le manchon d'insert fileté (22, 122), dans lequel, par l'intermédiaire de la surface externe, lorsqu'une liaison est établie avec un manchon d'insert fileté, un couple peut être transmis de l'élément d'entraînement (10, 110, 210, 310, 410) vers le manchon d'insert fileté (22, 122),
dans lequel l'élément d'entraînement (10, 110, 210, 310, 410) présente, au moins à certains endroits, une surface de section transversale dans laquelle une ligne circulaire (K), avec un centre par lequel passe l'axe de rotation (L), peut être inscrite,
dans lequel la portion de liaison (16), dans la moitié de guidage, de préférence au niveau de l'extrémité de guidage (28) du manchon d'insert fileté (22, 122), est disposée à l'intérieur du manchon d'insert fileté et est reliée, par l'intermédiaire d'une liaison par continuité de matière, par complémentarité de forme et/ou par force avec le manchon d'insert fileté de façon à ce qu'un couple transmis par le profilé d'entraînement (14) à l'élément d'entraînement soit transmis par l'élément d'entraînement au manchon d'insert fileté, dans lequel la longueur de la portion de liaison (16) représente de une à trois fois son diamètre.

3. Insert fileté (34, 134) destiné à être inséré dans un trou, comprenant
- un manchon d'insert fileté (22, 122) avec un filetage externe (24),
- un élément d'entraînement (10, 110, 210, 310, 410) pour la transmission d'un couple au manchon d'insert fileté (22, 122), dans lequel l'élément d'entraînement (10, 110, 210, 310, 410) comprend ce qui suit :
- un logement (12) avec un profilé d'entraînement (14), dans lequel, le long d'un axe longitudinal (L) de l'élément d'entraînement, peut être logé un outil d'entraînement pour la transmission d'un couple de l'outil d'entraînement à l'élément d'entraînement, dans lequel l'axe longitudinal passe par le centre du profilé d'entraînement et correspond à un axe de rotation de l'élément d'entraînement (10, 110, 210, 310, 410), autour duquel l'élément d'entraînement tourne lors de la transmission du couple de l'outil d'entraînement à l'élément d'entraînement,
- une portion de liaison axiale (16) avec une surface externe (18) pour la formation d'une liaison par continuité de matière, par complémentarité de forme et/ou par force avec le manchon d'insert fileté (22, 122), dans lequel, par l'intermédiaire de la surface externe, lorsqu'une liaison est établie avec un manchon d'insert fileté, un couple peut être transmis de l'élément d'entraînement (10, 110, 210, 310, 410) vers le manchon d'insert fileté (22, 122),
dans lequel l'élément d'entraînement (10, 110, 210, 310, 410) présente, au moins à certains endroits, une surface de section transversale dans laquelle une ligne circulaire (K), avec un centre par lequel passe l'axe de rotation (L), peut être inscrite,
dans lequel la portion de liaison (16), dans la moitié de guidage, de préférence au niveau de l'extrémité de guidage (28) du manchon d'insert fileté (22, 122), est disposée à l'intérieur du manchon d'insert fileté et est reliée, par l'intermédiaire d'une liaison par continuité de matière, par complémentarité de forme et/ou par force avec le manchon d'insert fileté de façon à ce qu'un couple transmis par le profilé d'entraînement (14) à l'élément d'entraînement soit transmis par l'élément d'entraînement au manchon d'insert fileté,
dans lequel l'élément d'entraînement (110, 310, 410) comprend en outre une portion filetée axiale (38) avec un filetage externe (40), dans lequel la portion filetée (38) est disposée plus près d'une extrémité de guidage (28) de l'élément d'entraînement que la portion de liaison (16) et dans lequel un diamètre intérieur de filetage (Dᵢ) de la portion filetée (38) est supérieur à un diamètre extérieur (Dₐ) de la portion de liaison (16).

4. Insert fileté (34, 134) selon l'une des revendications précédentes, dans lequel la surface externe de la portion de liaison (16) de l'élément d'entraînement (10, 110, 210, 310, 410) est lisse et/ou profilée et/ou
il est fabriqué à partir d'une pièce massive.

5. Insert fileté (34, 134) selon l'une des revendications précédentes, dans lequel la surface externe (18) de la portion de liaison (16) de l'élément d'entraînement (10, 110, 210, 310, 410) comprend des saillies dépassant radialement vers l'extérieur (20) pour une transmission d'un couple par l'intermédiaire d'une liaison par complémentarité de forme avec le manchon d'insert fileté (22, 122),
dans lequel les saillies (20) s'étendent de préférence sur la portion de liaison (16) dans la direction longitudinale.

6. Insert fileté (34, 134) selon l'une des revendications précédentes, dans lequel la forme extérieure de la portion de liaison (16) de l'élément d'entraînement (10, 110, 210, 310, 410) est symétrique en translation dans la direction longitudinale.

7. Insert fileté (34, 134) selon l'une des revendications précédentes, dans lequel le profilé d'entraînement (14) du logement (12) présente un profil rond à empreinte en étoile à six branches, un profil à polyèdre intérieur ou un profil polygonal intérieur.

8. Insert fileté (34, 134) selon l'une des revendications précédentes, dans lequel le logement (12) est constitué d'un trou traversant ou d'un trou borgne, dans lequel le trou traversant se rétrécit et/ou présente un épaulement, de préférence au moins à certains endroits le long de la direction longitudinale.

9. Insert fileté (34, 134) selon l'une des revendications précédentes, dans lequel la surface externe (18) de la portion de liaison (16) de l'élément d'entraînement (10, 110, 210, 310, 410)
- comprend trois lignes d'enveloppe (44) ou plus s'étendant la direction longitudinale, qui se trouvent sur une surface d'enveloppe imaginaire de la forme d'un cylindre circulaire vertical et
- est distante, sur des portions de surface (36) respectivement entre deux des lignes d'enveloppe (44) adjacentes radialement, de la surface d'enveloppe imaginaire, de façon à ce que, entre la surface d'enveloppe imaginaire et la surface externe (18) de la portion de liaison (16), des canaux imaginaires soient formés,
dans lequel la surface externe (18) de la portion de liaison présente de préférence un profil à polyèdre extérieur ou un profil polygonal extérieur et/ou dans lequel l'élément d'entraînement (10) comprend de préférence une portion de blocage axial (43) qui est adjacente à la portion de liaison (16) et qui présente,au niveau de la limite avec les canaux imaginaires, une distance plus faible ou aucune distance par rapport à la surface d'enveloppe imaginaire continuée.

10. Insert fileté (34, 134) selon l'une des revendications 3 à 9,
dans lequel le diamètre extérieur maximal (Dₘₐₓ) de la portion filetée (38) devient plus petit en direction de l'extrémité de guidage (28) de l'élément d'entraînement et/ou dans lequel le filetage extérieur (40) comprend de préférence au moins un demi-pas de filetage, plus particulièrement de préférence au moins un pas de filetage entière et/ou dans lequel le filetage extérieur de la portion filetée comprend de préférence des dents striées (42) et/ou
dans lequel l'élément d'entraînement (310, 410) est réalisé de préférence en plusieurs pièces avec un élément interne (46, 146) avec la portion de liaison (16) et avec un élément externe (48, 148) pour la formation de la portion filetée (38) qui entoure l'élément interne (46, 146) au moins à certains endroits.

11. Insert fileté (34, 134) selon l'une des revendications 1 à 9, dans lequel la longueur de la portion de liaison de l'élément d'entraînement (10, 110, 210, 310, 410) correspond à la longueur de l'élément d'entraînement (10, 110, 210, 310, 410).

12. Insert fileté (34, 134) selon l'une des revendications précédentes, dans lequel l'élément d'entraînement (10, 110, 210, 310, 410) est réalisé d'une seule pièce et/ou est constitué entièrement ou partiellement d'un métal durcissable.

13. Insert fileté (34, 134) selon l'une des revendications précédentes, dans lequel l'intérieur du manchon d'insert fileté comprend plusieurs cavités (33) qui sont formées et disposées en fonction des saillies dépassant radialement vers l'extérieur (20) de la portion de liaison, dans lequel les saillies sont logées dans les cavités, de façon à établir une liaison par complémentarité de forme.

14. Insert fileté (34, 134) selon l'une des revendications précédentes, dans lequel, entre la surface externe (18) de la portion de liaison et le manchon d'insert fileté, une liaison par continuité de matière est établie, qui est formée par brasage, collage ou soudure.

15. Insert fileté (34, 134) selon l'une des revendications précédentes, dans lequel le manchon d'insert fileté est constitué au moins partiellement d'un autre matériau que l'élément d'entraînement (10, 110, 210, 310, 410), dans lequel le manchon d'insert fileté est constitué de préférence d'un métal résistant à la corrosion, plus particulièrement de préférence d'un acier inoxydable ou d'une matière plastique ou comprend un de ces matériaux et/ou
dans lequel le manchon d'insert fileté comprend une bande métallique enroulée ou est constitué de celle-ci et/ou dans lequel le manchon d'insert fileté comprend un filetage interne (26).

16. Insert fileté (34, 134) selon l'une des revendications 3 à 15, dans lequel le filetage externe (40) sur la portion filetée (38) continue le filetage externe (24) du manchon d'insert fileté (22, 122) et présente de préférence le même pas que le filetage externe du manchon d'insert fileté.

17. Insert fileté (34, 134) selon la revendication 15 ou 16, dans lequel la portion de liaison (16) comprend un filetage externe qui correspond au filetage interne (26) du manchon d'insert fileté et dans lequel, entre la portion de liaison et le manchon d'insert fileté, est établie une liaison vissée par complémentarité de forme.
